(19) Europäisches Patentamt / European Patent Office / Office européen des brevets

(11) **EP 4 765 775 A1**

(12) **EUROPEAN PATENT APPLICATION**
published in accordance with Art. 153(4) EPC

(43) Date of publication:
**24.06.2026 Bulletin 2026/26**

(21) Application number: **24856779.4**

(22) Date of filing: **19.08.2024**

(51) International Patent Classification (IPC):
*H04L 67/12* (2022.01)

(52) Cooperative Patent Classification (CPC):
**H04L 67/12**

(86) International application number:
**PCT/KR2024/012289**

(87) International publication number:
**WO 2025/042168 (27.02.2025 Gazette 2025/09)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **18.08.2023 KR 20230108477**

(71) Applicant: **LG Electronics Inc.**
**Yeongdeungpo-gu**
**Seoul 07336 (KR)**

(72) Inventors:
• **KIM, Seonwook**
  **Seoul 06772 (KR)**
• **KIM, Jaehyung**
  **Seoul 06772 (KR)**
• **YANG, Suckchel**
  **Seoul 06772 (KR)**
• **LEE, Youngdae**
  **Seoul 06772 (KR)**
• **LEE, Seungmin**
  **Seoul 06772 (KR)**
• **HWANG, Daesung**
  **Seoul 06772 (KR)**

(74) Representative: **Plasseraud IP**
**104 Rue de Richelieu**
**CS92104**
**75080 Paris Cedex 02 (FR)**

(54) **APPARATUS AND METHOD FOR SUPPORTING BACKSCATTER-BASED AMBIENT INTERNET OF THINGS COMMUNICATION IN WIRELESS COMMUNICATION SYSTEM**

(57) The objective of the present disclosure is to support backscatter-based ambient Internet of things (IoT) communication in a wireless communication system. This method performed by a terminal in a wireless communication system may comprise the steps of: receiving at least one synchronization signal; receiving system information; performing, on the basis of the synchronization signal and the system information, a random access procedure for accessing a base station; and reflecting a carrier wave (CW) signal transmitted from the base station, so as to transmit a backscattered signal. The CW signal and the backscattered signal can be transmitted at different frequencies.

FIG. 26

EP 4 765 775 A1

## Description

### TECHNICAL FIELD

The following description relates to a wireless communication system, and to a device and method for supporting backscatter-based ambient Internet of Things (IoT) communication in a wireless communication system.

### BACKGROUND ART

The 5G mobile communications system, the successor to long-term evolution (LTE), is a new, clean-slate mobile communications system characterized by high performance, low latency, and high availability. 5G NR may utilize all available spectrum resources, from low-frequency bands below 1 GHz, to mid-frequency bands between 1 GHz and 10 GHz, and to high-frequency bands (e.g., millimeter wave) above 24 GHz. 6G systems are being developed based on the underlying technologies of 5G mobile communications.

The 6G system aims to achieve (i) extremely high data rates per device, (ii) a very large number of connected devices, (iii) global connectivity, (iv) ultra-low latency, (v) reduced energy consumption for battery-free Internet of Things (IoT) devices, (vi) ultra-reliable connectivity, and (vii) connected intelligence with machine learning capability. The vision of the 6G system may include four aspects: intelligent connectivity, deep connectivity, holographic connectivity, and ubiquitous connectivity.

### DISCLOSURE

### TECHNICAL PROBLEM

The present disclosure relates to a device and a method for effectively supporting ambient Internet of things (AmIoT) communication in a wireless communication system.

The present disclosure relates to a device and a method for effectively supporting backscattering-based communication in a wireless communication system.

The present disclosure relates to a device and a method for configuring a symbol duration for backscattering-based communication in a wireless communication system.

The present disclosure relates to a device and a method for signaling configuration of a symbol duration for backscattering-based communication in a wireless communication system.

The present disclosure relates to a device and a method for generating a signal for backscattering-based communication in a wireless communication system.

The present disclosure relates to a device and a method for maintaining a frequency component of a carrier wave (CW) signal for backscattering-based communication in a wireless communication system.

The present disclosure relates to a device and a method for adjusting a phase of a CW signal in consideration of a cyclic prefix (CP) of an orthogonal frequency division multiplexing (OFDM) symbol in a wireless communication system.

The present disclosure relates to a device and a method for providing diversity gain to a backscattered signal in a wireless communication system.

The present disclosure relates to a device and a method for randomizing interference with respect to a backscattered signal in a wireless communication system.

The present disclosure relates to a device and a method for performing frequency modulation on a backscattered signal in a wireless communication system.

The present disclosure relates to a device and a method for performing time modulation on a backscattered signal in a wireless communication system.

The technical objectives to be achieved in the present disclosure are not limited to the matters mentioned above, and other technical tasks not mentioned may be considered by those skilled in the art in the technical field to which the technical configuration of the present disclosure is applied, from the embodiments of the present disclosure to be described below.

### TECHNICAL SOLUTION

In one example of the present disclosure, a method performed by a user equipment (UE) in a wireless communication system may comprise: receiving at least one synchronization signal; receiving system information; performing a random access process for accessing a base station based on the synchronization signal and the system information; and transmitting a backscattered signal by reflecting a carrier wave (CW) signal transmitted from the base station. The CW signal and the backscattered signal may be transmitted from different frequencies.

In one example of the present disclosure, a base station in a wireless communication system may comprise: transmitting at least one synchronization signal; transmitting system information; performing a random access process with a user equipment (UE), based on the synchronization signal and the system information; and receiving a backscattered signal corresponding a carrier wave (CW) signal transmitted from the base station. The CW signal and the backscattered signal may be transmitted from different frequencies.

In one example of the present disclosure, a user equipment (UE) in a wireless communication system may comprise a transceiver and a processor connected to the transceiver, wherein the processor may control to: receive at least one synchronization signal; receive system information; perform a random access process for accessing a base station based on the synchronization signal and the system information; and transmit a backscattered signal by reflecting a carrier wave (CW) signal transmitted from the base station. The CW signal and the backscattered signal may be transmitted from different frequencies.

In one example of the present disclosure, a base station in a wireless communication system may comprise a transceiver and a processor connected to the transceiver,

In one example of the present disclosure, the processor may control to: transmit at least one synchronization signal; transmit system information; perform a random access process with a user equipment (UE), based on the synchronization signal and the system information; and receive a backscattered signal corresponding a carrier wave (CW) signal transmitted from the base station. The CW signal and the backscattered signal may be transmitted from different frequencies.

In one example of the present disclosure, a communication device may comprise at least one processor, and at least one computer memory connected to the at least one processor and storing instructions that direct operations when executed by the at least one processor, the operations comprising: receiving at least one synchronization signal; receiving system information; performing a random access process for accessing a base station based on the synchronization signal and the system information; and transmitting a backscattered signal by reflecting a carrier wave (CW) signal transmitted from the base station. The CW signal and the backscattered signal may be transmitted from different frequencies.

In one example of the present disclosure, a non-transitory computer-readable medium storing at least one instruction may comprise the at least one instruction executable by a processor, wherein the at least one instruction causing a device, the processor, to: receive at least one synchronization signal; receive system information; perform a random access process for accessing a base station based on the synchronization signal and the system information; and transmit a backscattered signal by reflecting a carrier wave (CW) signal transmitted from the base station. The CW signal and the backscattered signal may be transmitted from different frequencies.

The aspects described above of the present disclosure are merely some of the preferred embodiments of the present disclosure, and various embodiments reflecting the technical features of the present disclosure may be derived and understood by those skilled in the art based on the detailed description of the present disclosure described below.

**ADVANTAGEOUS EFFECTS**

According to embodiments based on the present disclosure, the following effects may be obtained.

According to the present disclosure, ambient Internet of things (AmIoT) communication may be effectively performed.

The effects obtainable from the embodiments of the present disclosure are not limited to those mentioned above, and other effects not explicitly described may be clearly derived and understood by those skilled in the art to which the technical features of the present disclosure are applied, based on the description of the embodiments of the present disclosure below. That is, unintended effects resulting from implementing the configurations described in the present disclosure may also be derived by those skilled in the art from the embodiments of the present disclosure.

**BRIEF DESCRIPTION OF THE DRAWINGS**

FIG. 1 illustrates an example of a flexible network topology applicable to the present disclosure.

FIG. 2 illustrates an example of a structure of a wireless communication system applicable to the present disclosure.

FIG. 3 illustrates an example of a wireless device applicable to the present disclosure.

FIG. 4 illustrates an example of a communication procedure between a first node and a second node applicable to the present disclosure.

FIG. 5 illustrates an example of a general functional architecture related to both functionality-based life cycle management (LCM) and model-based LCM.

FIG. 6 illustrates an example of an operation procedure based on an artificial intelligence (AI)/machine learning (ML)

model applicable to the present disclosure.

FIG. 7 illustrates an example of an electromagnetic spectrum applicable to the present disclosure.

FIG. 8 illustrates an example of a procedure for transmitting system information for THz communication applicable to the present disclosure.

FIG. 9 illustrates an example of a beam management procedure applicable to the present disclosure.

FIG. 10a illustrates an example of a general non-terrestrial network (NTN) scenario based on a transparent payload applicable to the present disclosure.

FIG. 10b illustrates an example of a general NTN scenario based on a regenerative payload applicable to the present disclosure.

FIG. 11a illustrates examples of components of an orbital parameter ephemeris (OPE) format.

FIG. 11b illustrates examples of offsets in a link related to a satellite.

FIG. 11c illustrates examples of timing advance (TA) values in a link related to a satellite.

FIG. 12a and FIG. 12b illustrate examples of sensing operations applicable to the present disclosure.

FIG. 13 illustrates an example of time/frequency resources for sensing operation applicable to the present disclosure.

FIG. 14 illustrates an example of a procedure related to sensing operation applicable to the present disclosure.

FIG. 15 illustrates a topology in which a base station and an ambient Internet of things (AmIoT) device are directly connected according to an embodiment of the present disclosure.

FIG. 16 illustrates a topology in which a base station and an AmIoT device are connected through an intermediate node according to an embodiment of the present disclosure.

FIG. 17a and FIG. 17b illustrate topologies supported by an auxiliary node according to an embodiment of the present disclosure.

FIG. 18 illustrates a topology in which a UE and an AmIoT device are directly connected according to an embodiment of the present disclosure.

FIG. 19a and FIG. 19b illustrate examples of power consumption according to an operational state of an energy harvesting-based device applicable to the present disclosure, and a device energy state.

FIG. 20 illustrates an example of a procedure of performing backscattering-based communication according to an embodiment of the present disclosure.

FIG. 21a and FIG. 21b illustrate examples of a phase structure of an OFDM symbol including a CP.

FIG. 22 illustrates an example of a procedure of transmitting a CW signal according to an embodiment of the present disclosure.

FIG. 23 illustrates an example of a procedure of transmitting data using backscattering-based communication according to an embodiment of the present disclosure.

FIG. 24 illustrates an example of a frequency change of a signal according to backscattering-based communication using frequency modulation according to an embodiment of the present disclosure.

FIG. 25 illustrates an example of a time delay of a signal according to backscattering-based communication using time modulation according to an embodiment of the present disclosure.

FIG. 26 illustrates an example of a procedure for performing backscattering-based communication using frequency modulation according to an embodiment of the present disclosure.

FIG. 27 illustrates an example of a structure of an AmIoT device according to an embodiment of the present disclosure.

## MODE FOR INVENTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, parentheses used in the present disclosure may indicate "for example". Specifically, when expressed as "control information (ABC)", "ABC" may be described as an example of the "control information". For example, "control information" may also include DEF as another example. In other words, the "control information" of the present disclosure is not limited to "ABC", and "ABC" may be described merely as an example of the "control information". In addition, even when expressed as "control information (i.e., ABC)" "ABC" may be described as an example of the "control information".

In addition, the terms "first", "second", and the like used in the present disclosure are only for the purpose of distinguishing one component from another and are not used to limit the components, and unless otherwise specified, do not limit the order, importance, or the like among the components. Therefore, the first component in one embodiment of the present disclosure may be referred to as the second component in another embodiment, and likewise, the second component in one embodiment may be referred to as the first component in another embodiment.

In the following description, 'when, if, or in case of' may be replaced with 'based on'.

A technical feature described individually in one figure in the present disclosure may be individually implemented, or may be simultaneously implemented.

In the present disclosure, a terminal refers to a user-side device (user equipment, UE) or a consumer-side device, and may also be referred to as a first node that receives or transmits a signal from or to a base station/a second node/an integrated access and backhaul (IAB) node, or a transmission-reception point (TRP). The terminal may correspond to a physical node or a logical node. The terminal may correspond to a user-side endpoint or to an intermediate point between other endpoints. In communication between two points that are not limited to endpoints (including one-to-one, many-to-one, one-to-many, and many-to-many communication), the terminal may correspond to a served node. The terminal may be a node with a fixed location or a node whose location is not fixed (i.e., a mobile node).

In the present disclosure, a base station (BS) refers to a network-side device and may also be referred to as a second node, an IAB node, an x-nodeB (x-NodeB, where x may be an abbreviation related to a radio access technology (RAT)), or a transmission-reception point (TRP). The base station may correspond to a physical node or a logical node. The base station may correspond to a network-side endpoint or to an intermediate point between other endpoints. In communication between two points that are not limited to endpoints (including one-to-one, many-to-one, one-to-many, and many-to-many communication), the base station may correspond to a serving node. The base station may be a node with a fixed location or a node whose location is not fixed.

In the present disclosure, a higher layer parameter may be configured for, pre-configured for, or predefined for a UE. For example, a base station may transmit a higher layer parameter to the UE. For example, the UE may transmit a parameter such as capability to the base station as a higher layer parameter. For example, the higher layer parameter may be transmitted through radio resource control (RRC) signaling or medium access control (MAC) signaling.

In the present disclosure, when information/state/parameter is "configured or pre-configured", it may be interpreted as information/state/parameter being provided or pre-provided to the UE through predefined signaling (e.g., SIB, MAC, RRC) from the base station. In the present disclosure, when information/state/parameter is "defined or pre-defined", it may be interpreted as information/state/parameter being already known or stored in advance at both the base station and the UE without signaling between the base station and the UE.

The technology described in the present disclosure may be used in various wireless communication systems such as code division multiple access (CDMA), frequency division multiple access (FDMA), time division multiple access (TDMA), orthogonal frequency division multiple access (OFDMA), and single carrier frequency division multiple access (SC-FDMA), and so on. The CDMA may be implemented with a radio technology such as universal terrestrial radio access (UTRA) or CDMA2000. The TDMA may be implemented with a radio technology such as global system for mobile communications (GSM)/general packet radio service (GPRS)/enhanced data rates for GSM evolution (EDGE). The OFDMA may be implemented with a radio technology such as Institute of Electrical and Electronics Engineers (IEEE) 802.11 (Wi-Fi), IEEE 802.16 (WiMAX), IEEE 802.20, evolved UTRA (E-UTRA), long term evolution (LTE), or 5G new radio (NR).

The technology described in the present disclosure may be implemented as 6G wireless technology and may be applied to various 6G systems. For example, a 6G system may have key factors such as enhanced mobile broadband (eMBB), ultra-reliable low latency communications (URLLC), massive machine-type communication (mMTC), artificial intelligence (AI) integrated communication, tactile internet, high throughput, high network capacity, high energy efficiency, low backhaul and access network congestion, and enhanced data security.

## A. 6G network architecture

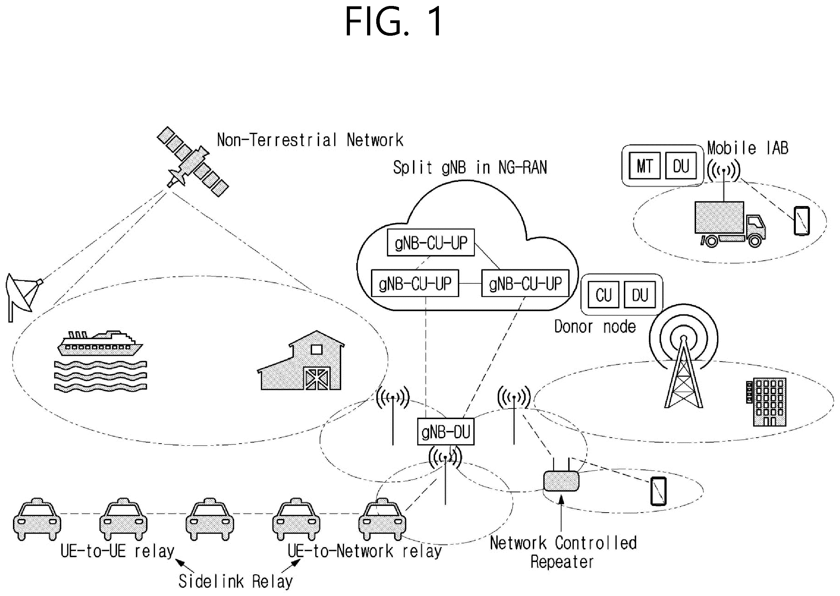

FIG. 1 illustrates an example of a flexible network topology applicable to the present disclosure.

To compensate for incomplete areas of network coverage, a split radio access network (RAN) topology that is more flexible and resilient may be considered. For this purpose, various nodes such as IAB nodes, relays, and RF repeaters as illustrated in FIG. 1 may be applied, and NTN may also be integrated. For example, an IAB node may correspond to a node providing a wireless backhaul. For example, a relay may refer to any intermediate point, and in the case of a sidelink relay in which a UE functions as a relay, it may collectively refer to a UE-to-network (U2N) relay and a UE-to-UE (U2U) relay. For example, an RF repeater may correspond to a node that performs simple signal amplification and forwarding, and in the case of a network-controlled repeater, it may not only perform signal amplification and forwarding but also adjust transmission and reception configuration based on information provided from the network. For example, an NTN node may correspond to a satellite or aerial vehicle that provides NTN coverage difficult to be provided by a terrestrial network. In addition to these examples, various other intermediate points may be introduced to improve the network topology.

Referring to FIG. 1, the split RAN may support division of a base station into one centralized unit (CU) and one or more distributed units (DUs). The CU and DU may correspond to logical units. The CU may be further divided into a control plane (CP) part and one or more user plane (UP) parts. A failure in the CU-CP may affect not only the CU-UP but also the DU, and therefore, various intermediate points may be introduced to compensate for this.

An intermediate point may correspond to a UE or a base station depending on its relative relationship with other nodes. For example, an IAB node may include a mobile termination (MT) part and a DU. The MT may connect the IAB node to a donor node. The DU of the IAB node may serve other UEs or connect to another IAB node to provide multi-hop wireless backhaul to UEs. That is, the IAB node may correspond to a base station in relation to a user-side node, and may correspond to a UE in relation to a network-side node.

In some examples of the present disclosure, the description of a UE may be equally applied not only to a user-side endpoint but also to an intermediate point that corresponds to a UE in relation to a network-side endpoint. Similarly, in some examples of the present disclosure, the description of a base station may be equally applied not only to a network-side endpoint but also to an intermediate point that corresponds to a base station in relation to a user-side endpoint. However, in most cases where no additional explanation is provided for operations among three or more entities, the communication entities in the present disclosure are briefly described by the terms UE and/or base station (or first node and/or second node), where the terms UE and/or base station (or first node and/or second node) are interpreted as including or substituting any endpoint or intermediate point depending on the relationship with other nodes.

That is, in some examples of the present disclosure, for the sake of simplicity of description, the subject of an operation may be referred to as a base station and/or a UE (or a first node and/or a second node). In addition, the terms base station and/or UE (or first node and/or second node) may be interpreted or substituted as follows: for example, the base station (or first node) and the UE (or second node) may respectively correspond to a first endpoint and a second endpoint; may respectively correspond to an endpoint and an intermediate point; may respectively correspond to an intermediate point and an endpoint; or may respectively correspond to a first intermediate point and a second intermediate point.

In the present disclosure, there may be no intermediate point or one or more intermediate points between the base station and the UE. When an intermediate point exists, the intermediate point may correspond to an IAB node, a relay, an RF repeater, a non-terrestrial network (NTN) node, or a node supporting other functions. The intermediate point may be a node with a fixed location or a node whose location is not fixed.

## Systems applicable to this disclosure

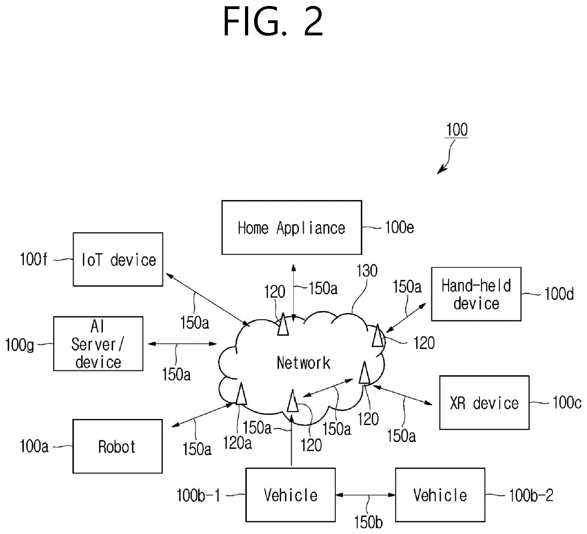

FIG. 2 illustrates an example of a structure of a wireless communication system applicable to the present disclosure. The communication system 100 of FIG. 2, to which the present disclosure is applied, includes a wireless device 110, a network device 120, and a network 130. Here, the wireless device 110 refers to a device that performs communication using a radio access technology (e.g., LTE, LTE-A, LTE-A Pro, NR, 5G, 5G-A, 6G) and may be referred to as a communication/radio/5G/6G device. Without being limited thereto, the wireless device 110 may include a robot 110a, vehicles 110b-1 and 110b-2, an extended reality (XR) device 110c, a hand-held device 110d, a home appliance 110e, an Internet of Things (IoT) device 110f, and an artificial intelligence (AI) device/server 110g. For example, the vehicles may include vehicles equipped with wireless communication capability, autonomous vehicles, or vehicles capable of performing vehicle-to-vehicle communication, and the vehicles 110b-1 and 110b-2 may include unmanned aerial vehicles (UAVs) such as drones. The XR device 110c may include augmented reality (AR), virtual reality (VR), or mixed reality (MR) devices and may be implemented in the form of a head-mounted device (HMD), a head-up display (HUD) mounted in a vehicle, a television, a smartphone, a computer, a wearable device, a home appliance, digital signage, a vehicle, or a robot. The hand-held device 110d may include a smartphone, a smart pad, a wearable device (e.g., smart watch, smart glasses), or a computer (e.g., laptop, etc.). The home appliance 110e may include a TV, refrigerator, or washing machine. The IoT device 110f may include sensors or smart meters. The wireless device 110 may correspond to a UE (or a first node) or an intermediate point. The network device 120 may correspond to a base station (or a second node) or another intermediate point. For example, the network device 120 may also be implemented as a wireless device 110, and a specific wireless device 120a may operate as the network device 120 for another wireless device 110.

The wireless devices 110a to 110f may be connected to the network 130 through the network device 120. AI technology may be applied to the wireless devices 110a to 110f, and the wireless devices 110a to 110f may be connected to an AI server 110g through the network 130. The network 130 may be configured using a 3G network, a 4G (e.g., LTE) network, a 5G (e.g., NR) network, or a 6G network. The wireless devices 110a to 110f may communicate with each other through the network device 120/the network 130, but may also communicate directly (e.g., through sidelink communication) without passing through the network device 120/the network 130. For example, the vehicles 110b-1 and 110b-2 may perform direct communication (e.g., vehicle-to-vehicle (V2V) or vehicle-to-everything (V2X) communication). In addition, the IoT device 110f (e.g., a sensor) may perform direct communication with another IoT device (e.g., another sensor) or with another wireless device 110a to 110f.

Wireless communication/connection 150a, 150b, 150c may be established between wireless devices 110a to 110f and a network device 120, and between network devices 120. Here, the wireless communication/connection may be established through various wireless access technologies such as uplink/downlink communication 150a, sidelink communication 150b (or D2D communication), and communication between network devices 150c (e.g., relay, integrated access backhaul (IAB)). Through the wireless communication/connection 150a, 150b, 150c, the wireless device and the network device/wireless device, and the network device and the network device may transmit and receive wireless signals with each other. For example, the wireless communication/connection 150a, 150b, 150c may transmit and receive signals through various physical channels. To this end, based on various descriptions of the present disclosure, at least a part of various configuration information configuring processes for transmitting/receiving wireless signals, various signal processing processes (e.g., channel encoding/decoding, modulation/demodulation, resource mapping/demapping, etc.), and resource allocation processes may be performed.

## Device applicable to the present disclosure

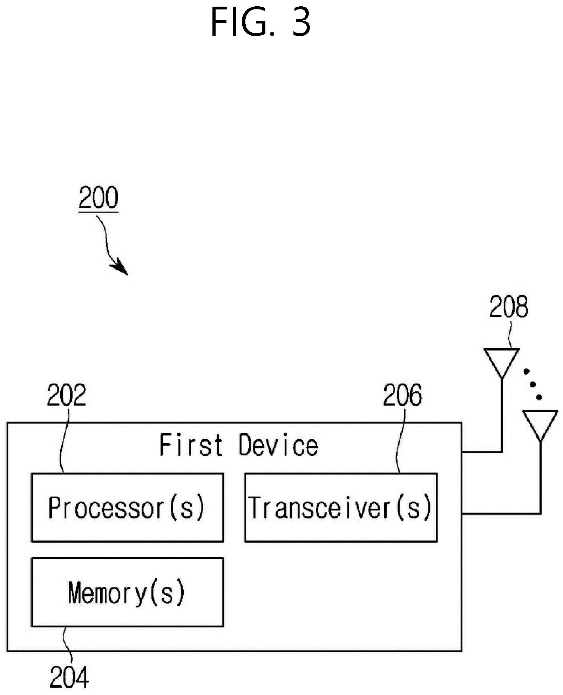

FIG. 3 illustrates an example of a wireless device applicable to the present disclosure.

Referring to FIG. 3, a wireless device 200 may transmit/receive a radio signal through various wireless access technologies (e.g., LTE, LTE-A, LTE-A pro, NR, 5G, 5G-A, 6G). The wireless device 200 may include at least one processor 202 and at least one memory 204 and additionally further include at least one transceiver 206 and/or at least one antenna 208.

The processor 202 may be configured to control the memory 204 and/or the transceiver 206 and to implement the descriptions, functions, procedures, proposals, methods, and/or operation flowcharts disclosed in this document. For example, the processor 202 may generate first information/signal by processing information in the memory 204 and then transmit a radio signal including the first information/signal through the transceiver 206. In addition, the processor 202 may receive a radio signal including second information/signal through the transceiver 206 and then store information obtained from signal processing of the second information/signal in the memory 204. The memory 204 may be connected to the processor 202 and store a variety of information associated with an operation of the processor 202. For example, the memory 204 may store a software code including instructions for implementing some or all of processes controlled by the processor 202 or for implementing the descriptions, functions, procedures, proposals, methods, and/or operation flowcharts disclosed in this document. Herein, the processor 202 and the memory 204 may be a part of a communication modem/circuit/chip designed for implementing a wireless communication technology. The transceiver 206 may be connected to the processor 202 and transmit and/or receive a radio signal through the at least one antenna 208. The transceiver 206 may be a transmitter and/or a receiver. The transceiver 206 may be used interchangeably with a radio frequency (RF) unit. In the present disclosure, a wireless device may mean a communication modem/circuit/chip.

Hereinafter, a hardware element of the wireless device 200 will be described in further detail. Although not being limited thereto, at least one protocol layer may be implemented by the at least one processor 202. For example, the at least one processor 202 may implement at least one layer (e.g., a functional layer such as physical (PHY), media access control (MAC), radio link control (RLC), packet data convergence protocol (PDCP), radio resource control (RRC), and service data adaptation protocol (SDAP)). The at least one processor 202 may generate at least one protocol data unit (PDU) and/or at least one service data unit (SDU) according to the descriptions, functions, procedures, proposals, methods, and/or operation flowcharts disclosed in this document. The at least one processor 202 may generate a message, control information, data, or information according to the descriptions, functions, procedures, proposals, methods, and/or operation flowcharts disclosed in this document. The at least one processor 202 may generate a signal (e.g., a baseband signal) including a PDU, an SDU, a message, control information, data, or information according to a function, a procedure, a suggestion and/or a method, which are disclosed in the present document, and provide the signal to the at least one transceiver 206. The at least one processor 202 may receive a signal (e.g., a baseband signal) from the at least one transceiver 206 and obtain a PDU, an SDU, a message, control information, data, or information according to the descriptions, functions, procedures, proposals, methods, and/or operation flowcharts disclosed in this document.

The at least one processor 202 may be referred to as a controller, a microcontroller, a microprocessor, or a microcomputer. The at least one processor 202 may be implemented by hardware, firmware, software, or a combination thereof. As an example, at least one application specific integrated circuit (ASIC), at least one digital signal processor (DSP), at least one digital signal processing devices (DSPD), at least one programmable logic device (PLD), or at least one field programmable gate array (FPGA) may be included in the at least one processor 202. The descriptions, functions, procedures, proposals, methods, and/or operation flowcharts disclosed in this document may be implemented using firmware or software, and the firmware or software may be implemented to include the modules, procedures, or functions. Firmware or software configured to perform the descriptions, functions, procedures, proposals, methods, and/or operation flowcharts disclosed in this document may be included in the at least one processor 202 or may be stored in the at least one memory 204 and executed by the at least one processor 202. The descriptions, functions, procedures, proposals, methods, and/or operation flowcharts disclosed in this document may be implemented using firmware or software in the form of code, an instruction, and/or a set of instructions.

The at least one memory 204 may be connected to the at least one processor 202 and store various forms of data, signals, messages, information, programs, codes, indications, and/or instructions. The at least one memory 204 may be configured as a read only memory (ROM), a random access memory (RAM), an erasable programmable read only memory (EPROM), a flash memory, a hard drive, a register, a cache memory, a computer-readable storage media, and/or a combination thereof. The at least one memory 204 may be located at the interior and/or exterior of the at least one processor 202. In addition, the at least one memory 204 may be connected to the at least one processor 202 through various technologies such as wired or wireless connection.

The at least one transceiver 206 may transmit user data, control information, and wireless signals/channels, mentioned in the methods and/or operation flowcharts of this document, to at least one other device. The at least one transceiver 206 may receive user data, control information, and wireless signals/channels, mentioned in the descriptions, functions, procedures, proposals, methods, and/or operation flowcharts disclosed in this document, from at least one other device. For example, the at least one transceiver 206 may be connected to the at least one processor 202 and transmit and receive radio signals. For example, the at least one processor 202 may control the at least one transceiver 206 to transmit user data, control information, or a radio signal to at least one other device. In addition, the at least one processor 202 may control the at least one transceiver 206 to receive user data, control information, or a radio signal from at least one other device. In addition, the at least one transceiver 206 may be connected to the at least one antenna 208, and the at least one transceiver 206 may be configured to transmit and receive user data, control information, radio signals/channels mentioned in the descriptions, functions, procedures, proposals, methods and/or operation flowcharts disclosed in this document through the at least one antenna 208. In this document, the at least one antenna may be a plurality of physical antennas or a plurality of logical antennas (e.g., antenna ports). The at least one transceiver 206 may convert received radio signals/channels from RF band signals into baseband signals in order to process received user data, control information, and radio signals/channels using the at least one processor 202. The at least one transceiver 206 may convert the user data, control information, and radio signals/channels processed using the at least one processor 202 from the baseband signals into the RF band signals. To this end, the at least one transceiver 206 may include an (analog) oscillator and/or a filter.

The constituents of the wireless device, which are described in reference to FIG. 3, may be referred to as other terms from functional aspects. For example, the processor 202 may be referred to as a control unit, the transceiver 206 may be referred to as a communication unit, and the memory 204 may be referred to as a storage unit. In some cases, the communication unit may be used for a meaning including at least a part of the processor 202 and the transceiver 206.

The structure of the wireless device described with reference to FIG. 3 may be understood as at least a part of the structure of various devices. For example, the structure of the wireless device illustrated in FIG. 3 may correspond to at least a part of the various devices described with reference to FIG. 2 (e.g., a robot 110a, vehicles 110b-1 and 110b-2, an XR device 110c, a portable device 110d, a home appliance 110e, an IoT device 110f, and an AI device/server 110g). Furthermore, depending on various embodiments, the device may further include other components in addition to those illustrated in FIG. 3.

For example, a device may be a hand-held device such as a smartphone, a smart pad, a wearable device (e.g., a smart watch, smart glasses), and a hand-held computer (e.g., a laptop, etc.). In this case, the device may further include at least one of a power supply unit that supplies power and includes a wired/wireless charging circuit, a battery and the like, an interface unit including at least one port (e.g., an audio input/output port, a video input/output port) for connection to another device, and an input/output unit for inputting and outputting video information/signals, audio information/signals, data and/or information input from a user.

For example, a device may be a mobile device such as a mobile robot, a vehicle, a train, a manned/unmanned aerial vehicle (AV), and a ship. In this case, the device may further include at least one of a drive unit including at least one of the engine, motor, powertrain, wheels, brake, and steering device of the device, a power supply unit that supplies power and includes a wired/wireless charging circuit, a battery and the like, a sensor unit that senses state information of the device or surrounding the device, environment information and user information, an autonomous driving unit that performs functions such as route maintenance, speed control and destination setting, and a location measurement unit that obtains moving object location information through a global positioning system (GPS) and various sensors.

For example, a device may be an XR device such as an HMD, a head-up display (HUD) provided in a vehicle, a television, a smartphone, a wearable device, a home appliance device, a digital signage, a vehicle, and a robot. In this case, the device may further include at least one of a power supply unit that supplies power and includes a wired/wireless charging circuit, a battery and the like, an input/output unit that obtains control information and data from outside and outputs a generated XR object, and a sensor unit that senses state information of the device or surrounding the device, environment information and user information.

For example, a device may be a robot that may be classified for industrial use, medical use, domestic use, military use and the like according to purposes of use or fields. In this case, the device may further include at least one of a sensor unit that senses state information of the device or surrounding the device, environment information and user information and a drive unit that moves robot joints and performs various other physical operations.

For example, a device may be an AI device such as a TV, a projector, a smartphone, a PC, a laptop, a terminal for digital broadcasting, a tablet PC, a wearable device, a set-top box (STB), a radio, a washing machine, a refrigerator, a digital signage, a robot, and a vehicle. In this case, the device may further include at least one of an input unit that obtains various types of data from outside, an output unit that generates outputs associated with sight, hearing, or touch, a sensor unit that senses state information of the device or surrounding the device, environment information and user information, and a training unit that uses learning data to learn a model consisting of artificial neural networks.

The structure of the wireless device illustrated in FIG. 3 may be understood as being a part of a UE (or a first node), a part of an intermediate point, or a part of a base station (or a second node). When the device illustrated in FIG. 3 is the base station (or the second node), the device may further include a wired transceiver for front haul and/or back haul communication. However, when the front haul and/or back haul communication is based on wireless communication, at least one transceiver 206 illustrated in FIG. 3 may be used for the front haul and/or back haul communication, and the wired transceiver may not be included.

### B. Communication Procedures

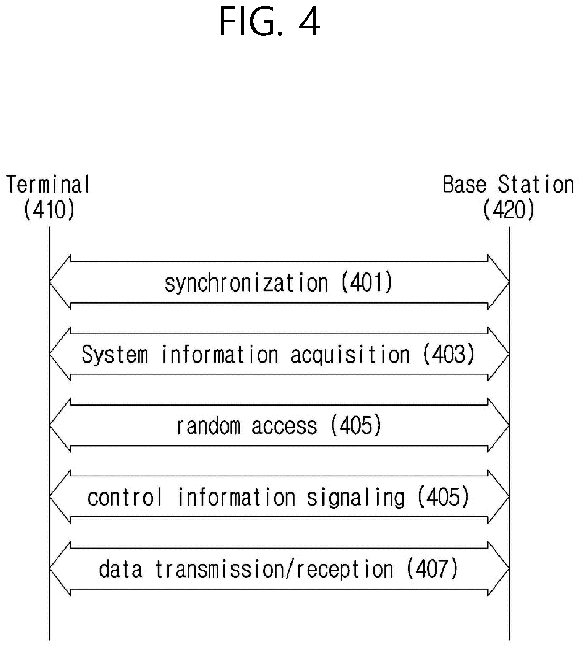

FIG. 4 illustrates an example of a communication procedure between a first node (e.g., a UE) and a second node (e.g., a base station) applicable to the present disclosure. The second node of FIG. 1 may support dynamic spectrum sharing (DSS) and may provide connection not only to nodes where 6G technology is implemented but also to nodes where pre-6G wireless communication (e.g., 5G, 4G) technology is implemented. That is, the first node of FIG. 1 may implement 6G technology or may implement pre-6G wireless communication (e.g., 5G, 4G) technology. In addition, the first node and/or the second node may support not only a non-overlapping full duplex mode but also a full duplex mode.

In FIG. 4, for simplicity of description, the first node and the second node are assumed to be a UE and a base station, respectively, and operations in which the UE 440 and the base station 420 transmit and/or receive data and operations performed prior thereto are illustrated. However, the operation of FIG. 1 is not limited to the operation between the UE and the base station, and may be interpreted as the operation between the first node and the second node. In addition, although FIG. 1 illustrates a direct wireless signal transmission/reception operation between the UE 440 and the base station 420, one or more intermediate points may exist between the UE 440 and the base station 420, and the wireless signal may be transmitted and received through one or more intermediate points.

Referring to FIG. 4, in step 401, the UE 440 and the base station 420 perform synchronization. For example, the UE 440 may perform an initial cell search operation. Specifically, the UE 440 may detect at least one synchronization signal for base station connection, which is transmitted from the base station 420 according to a predefined rule. Here, the synchronization signal may include a plurality of synchronization signals (e.g., a first synchronization signal (for example, a primary synchronization signal), a second synchronization signal (for example, a secondary synchronization signal), etc.) classified according to structure or purpose. Through this, the UE 440 may identify a boundary of a unit (e.g., a frame, subframe, slot, and/or symbol) configuring wireless signal transmission of the base station 420, and may obtain information related to the base station 420 (e.g., a cell identifier).

In step 403, the UE 440 obtains system information transmitted from the base station 420. The system information is information related to attributes, characteristics, and/or capabilities of the base station 420, which are required for the UE to access the base station 420 and use services, and may be classified according to content (e.g., whether it is essential for access), transmission structure (e.g., which channel is used, whether it is provided on-demand), and the like, for example, the system information may be classified into first system information (e.g., a master information block (MIB), primary system information) and second system information (e.g., a system information block (SIB), secondary system information). If necessary, the UE 440 may transmit a signal requesting the system information before receiving the system information. However, the request and provision of the system information may be performed after a random access procedure described below.

In step 405, the UE 440 and the base station 420 perform a random access procedure. The UE 440 may transmit and/or receive at least one message (e.g., a random access preamble, a random access response (RAR) message, etc.) for the random access procedure based on information related to a channel (e.g., channel location, channel structure, structure of supported preambles, etc.) for the random access procedure of the base station 420 obtained through the system information. For example, the UE 440 may transmit a first message (e.g., a preamble, MSG1) through a channel for the random access procedure, receive a second message (e.g., an RAR message, MSG2), transmit a third message (e.g., MSG3) including information related to the UE 440 (e.g., identification information) to the base station 420 by using scheduling information included in the second message, and receive a fourth message (e.g., MSG4) for contention resolution and/or connection establishment. In another example, the first message and the third message may be transmitted and received as a single message, or the second message and the fourth message may be transmitted and received as a single message.

In step 407, the UE 440 and the base station 420 perform signaling of control information. Here, the control information may be defined in various layers such as a layer for controlling connection (e.g., a radio resource control (RRC) layer), a layer for processing mapping between logical channels and transport channels (e.g., a media access control (MAC) layer), and a layer for processing physical channels (e.g., a physical (PHY) layer). For example, the UE 440 and the base station 420 may perform at least one of signaling for establishing a connection, signaling for determining configurations related to communication, and signaling for indicating allocated resources.

In step 409, the UE 440 and the base station 420 transmit and/or receive data. In other words, the UE 440 and the base station 420 may process and transmit and/or receive data based on the signaling of control information. For example, when transmitting data, the UE 440 or the base station 420 may perform at least one of channel encoding, rate matching, scrambling, constellation mapping, layer mapping, waveform modulation, antenna mapping, and resource mapping on information bits. Conversely, when receiving data, the UE 440 or the base station 420 may perform at least one of signal extraction from a resource, waveform demodulation per antenna, signal arrangement considering layer mapping, constellation demapping, descrambling, and channel decoding.

The procedure illustrated in FIG. 4 has been described as being performed between a UE and a base station. However, the procedure of FIG. 4 may be performed between other devices as well. For example, the UE may be replaced with an ambient Internet of things (AmIoT) device and/or any one of devices proposed in the present disclosure. Additionally, the base station may be replaced with a TRP, a UE, and/or any one of devices proposed in the present disclosure.

## C. 6G System Core Technologies

As core implementation technologies of a 6G system, technologies such as artificial intelligence (AI), terahertz (THz) communication, optical wireless technology, free-space optical (FSO) backhaul network, massive MIMO technology, blockchain, 3D networking, quantum communication, unmanned aerial vehicles, cell-free communication, wireless information and energy transfer (WIET), integration of sensing and communication, integration of access and backhaul networks, holographic beamforming, big data analytics, and large intelligent surface (LIS) may be adopted.

### C-1. Artificial intelligence

Introducing artificial intelligence (AI) into communication may simplify and enhance real-time data transmission. AI may determine how complex target tasks are performed by using numerous analyses. That is, AI may improve efficiency and reduce processing delay. Time-consuming tasks such as handover, network selection, and resource scheduling may be performed instantly by using AI. AI may also play an important role in M2M, machine-to-human, and human-to-machine communications. In addition, AI may enable rapid communication in a brain-computer interface (BCI). An AI-based communication system may be supported by meta-materials, intelligent structures, intelligent networks, intelligent devices, intelligent cognitive radios, self-sustaining wireless networks, and machine learning.

[Functional Framework]

The following describes a functional framework for AI/ML operations.

Hereinafter, for a more specific description of AI (or AI/ML), terms may be defined as follows.

- Data collection: Data collected from network nodes, management entities, or UEs, serving as the basis for AI model training, data analysis, and inference
- AI model: A data-driven algorithm applying AI techniques that generates a set of outputs including prediction information and/or decision parameters based on a set of inputs
- AI/ML training: An online or offline process of training an AI model by learning functions and patterns that best represent data and enable inference, to obtain a trained AI/ML model
- AI/ML inference: A process of predicting or inducing decisions based on collected data and an AI model by using the trained AI model

The Life Cycle Management (LCM) procedure for an AI/ML model (i.e., model training, model deployment, model inference, model monitoring, model update, etc.) may be classified into functionality-based LCM and model-based LCM. In functionality-based LCM, the AI/ML model may not be identifiable in the network, and the network may indicate activation/deactivation/fallback/switching of the AI/ML functionality. In model-identifier (ID)-based LCM, the AI/ML model may be identifiable in the network, and the network/UE may activate/deactivate/select/switch the AI/ML model through the model ID.

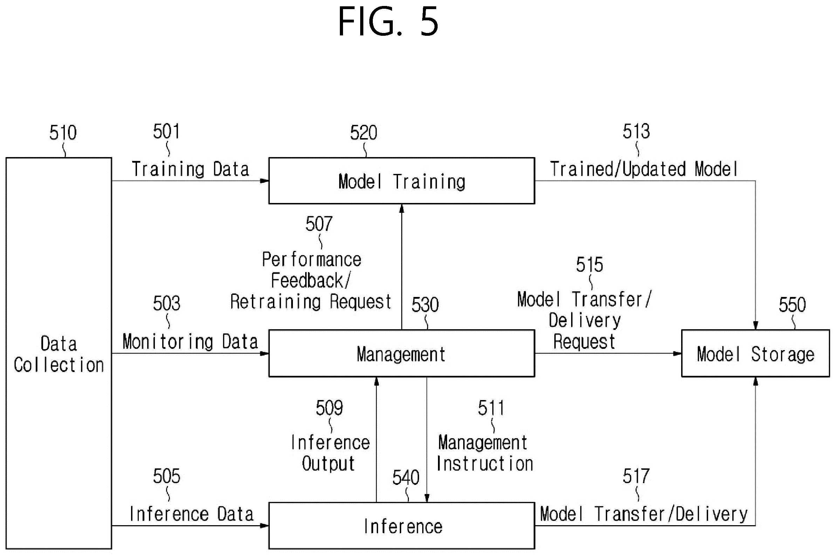

FIG. 5 illustrates an example of a general functional architecture related to both functionality-based LCM and model-based LCM. Some functions or some data/information/command flows (i.e., arrows) illustrated in FIG. 5 may be omitted.

Referring to FIG. 5, a general functional framework may be configured to include a data collection function 510, a model training function 520, a management function 530, an inference function 540, and a model storage function 550.

The data collection function 510 provides input data to the model training function 520, the management function 530, and the inference function 540. The data collection function 510 may perform data preparation based on raw data and may provide processed input data through the data preparation. Examples of raw data may include received data or measurement data from UEs or other network entities, and inference or output of an AI/ML model. The data collection function 510 may be performed by a single entity (e.g., a UE, a network node, etc.) or may be performed by a plurality of entities.

Here, training data 511 refers to data required as input for the AI/ML model training function 520. Monitoring data 512 refers to data required as input for the management 530 of the AI/ML model or the AI/ML functionality. Inference data 513 refers to data required as input for the AI/ML inference function 530.

The model training function 520 performs AI/ML model training, validation, and testing capable of generating model performance metrics that may be used as part of an AI/ML model testing procedure. The model training function 520 may perform data preparation (e.g., data pre-processing and cleaning, forming, and transformation) based on training data 511 transferred from the data collection function 510, if necessary.

Trained/Updated Model 521: If there is a model storage function 550, it is used to transfer a trained, validated and tested AI/ML model to the model storage function 550 or to transfer an updated version of the model to the model storage function 550.

The management function 530 supervises the operation of the AI/ML model or the AI/ML functionality. In addition, the management function 530 may make decisions to ensure appropriate inference operations based on data received from the data collection function 510 (i.e., monitoring data 512) and/or data received from the inference function 540 (i.e., inference output 541).

The management instruction 532 refers to information required as input to manage the inference function 540. The related information may include selection/(de)activation/switching of an AI/ML model or an AI/ML-based functionality, and may also include fallback to non-AI/ML operation (i.e., not relying on an inference process).

The model transfer/delivery request 533 may be used to request one or more models from the model storage 550.

The performance feedback/retraining request 531 refers to information required as input to the model training function 520 (e.g., for the purpose of model retraining or model updating).

The inference function 540 provides an output from a process of applying an AI/ML model or an AI/ML functionality by using data (i.e., inference data 513) provided by the data collection 510 as input. The inference function 540 may perform data preparation (e.g., data pre-processing and cleaning, formatting, and transformation) based on the inference data 513 transferred by the data collection 510. If necessary, the inference function 540 may also perform data preparation (e.g., data pre-processing and cleaning, forming, and transformation) based on the inference data 513 provided by the data collection function 510.

The inference output 541 is data used by the management function 530 to monitor the performance of an AI/ML model or an AI/ML functionality. The inference output 541 may include an inference output of the AI/ML model generated by the inference function 540, and details of the inference output may vary depending on the use case.

The model storage function 550 stores trained/updated models that may be used to perform the inference function 540. The model storage function 550 illustrated in FIG. 5 may serve as a reference point, if applicable, for protocol termination, model transmission/transfer, and related processes. In addition, the model storage function 550 is merely an example and is not intended to limit the actual storage location of the AI/ML model, and it may be omitted.

The model transfer/delivery 551 is used to deliver an AI/ML model to the inference function.

Depending on the capabilities of AI/ML functions between a plurality of nodes, levels of cooperation may be defined as follows, and modifications may be possible through a combination of a plurality of levels or separation of any one level.

Cat 0a) No collaboration framework: The AI/ML algorithm is purely implementation-based and does not require any modification of the wireless interface.

Cat 0b) This level corresponds to a framework without collaboration but involves a modified wireless interface adapted to efficiently implemented AI/ML algorithms.

Cat 1) Node-to-node assistance is involved to improve the AI/ML algorithm of each node. For example, this applies when a specific node receives assistance (for training, adaptation, etc.) from another node, and vice versa. At this level, model exchange between network nodes is not required.

Cat 2) Joint AI/ML operations among a plurality of nodes may be performed. This level requires AI/ML model commands or exchanges between network nodes.

FIG. 5 is a diagram illustrating an overall functional framework for an AI/ML model, and not all functions and/or all data/information/command signals illustrated in FIG. 5 may be performed within a specific node, but only some of them may be performed.

The AI/ML model may be classified into a one-side model or a two-side model depending on whether training and/or inference is performed within a single node or jointly/sequentially among a plurality of nodes.

The one-side model may refer to an AI/ML model in which inference is entirely performed by a single node (e.g., a UE or a network). Here, training of the AI/ML model may also be entirely performed by a single node. The training and inference of the AI/ML model may be performed by the same node, or the training and inference of the AI/ML model may be performed by different nodes, respectively.

The two-side model may refer to an AI/ML model in which joint inference is performed across a plurality of nodes (e.g., a UE and a network). The joint inference means that inference is jointly performed across a plurality of nodes, for example, a first part of the inference may be performed by a first node, and the remaining part of the inference may be performed by a second node. The two-side model may be classified into several types according to the training method of the AI/ML model.

- First type: The AI/ML model may be trained at a single node. In this case, joint training may be performed. Afterward, the trained model may be distributed to other nodes or entities.
- Second type: Joint training of the AI/ML model may be performed respectively at a plurality of nodes or entities (e.g., a network and a UE). The joint training may mean that model generation (e.g., a CSI generation part) and model reconstruction (CSI compression for sub-use cases) are trained within the same loop for forward activation and backward gradient. In this type, the joint training may include both simultaneous training (i.e., model generation training and model reconstruction training are performed simultaneously) and sequential training (i.e., model reconstruction training is performed after model generation training).
- Third type: Separate training of the AI/ML model may be performed respectively at a plurality of nodes (e.g., a network and a UE). The separate training may mean that training is sequentially started at one node and then continued at another node. In this case, when a first node first performs the AI/ML model and shares training data with a second node, the second node may perform the AI/ML model by using the shared training data. For example, training for a CSI generation part may be performed by the UE, and CSI reconstruction may be performed by the network.

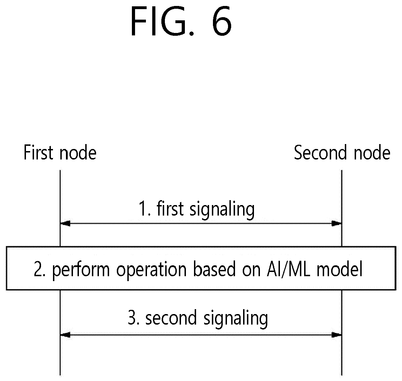

In the present disclosure described below, even without a specific mention (i.e., without an explicit reference such as by/based on/for an AI/ML model), the operation proposed in the present disclosure may be described or interpreted as being based on an AI/ML model, as illustrated in FIG. 6. FIG. 6 illustrates an example of an operation procedure based on an AI/ML model applicable to the present disclosure.

In addition, unless otherwise specifically limited in the description of the present disclosure, the AI/ML model may correspond to a one-side model in which inference is entirely performed by a single node, or a two-side model in which joint inference is performed across a plurality of nodes.

Step 1: In the description of the present disclosure provided below, signaling (e.g., information/data/channel/-signal, etc.) or a set of signaling between a specific node (e.g., a UE, a network, etc.) and another node may be interpreted, even without explicit mention, as signaling or a set of signaling in step 1 used to perform operations based on an AI/ML model. For example, such signaling may correspond to training data used for AI/ML model training (i.e., generation and/or reconstruction) as illustrated in FIG. 2, or to inference data used for AI/ML model inference, or to feedback for an AI/ML model. If signaling between nodes is not required prior to the AI/ML model-based operation in the present disclosure, step 1 may be omitted. When a one-side model is used in the present disclosure, unidirectional/bidirectional signaling (set) in the present disclosure may correspond to the signaling in step 1. In addition, when a two-side model is used in the present disclosure, unidirectional/bidirectional signaling in the present disclosure may also correspond to the signaling in step 1, and repetitive signaling operations may also correspond to the signaling in step 1.

For example, in AI/ML model-based beam management (BM), when beam(s) with good quality are predicted (i.e., inferred) by the base station based on the AI/ML model, the base station may receive quality/strength information for multiple beams from the UE. Also, beam(s) with good quality are predicted (i.e., inferred) by the UE based on the AI/ML model, the UE may receive a plurality of beams from the base station.

Step 2: In the description of the present disclosure provided below, an operation (e.g., computation, selection, prediction, etc.) performed at a specific node (e.g., a UE, a network, etc.) or a joint operation (e.g., computation, selection, prediction, etc.) performed at a plurality of nodes (e.g., a UE, a network, etc.) may correspond to the operation of step 2, which is based on one or more functions within the functional framework of an AI/ML model, even without explicit mention. For example, this may correspond to training (i.e., generation and/or reconstruction) or inference of the AI/ML model illustrated in FIG. 2. When a one-side model is used, an operation performed by a single node in the present disclosure may correspond to the operation of step 2, in addition, when a two-side model is used, a joint operation performed by a plurality of nodes in the present disclosure may correspond to the operation of step 2.

For example, in AI/ML model-based BM, the base station may use quality/strength information for a plurality of beams received from the UE as inference data and may predict (i.e., infer) beam(s) with good quality based on the AI/ML model. Also, the UE may measure a plurality of beams received from the base station, use the measurement results as inference data, and predict (i.e., infer) beam(s) of good quality based on the AI/ML model.

Step 3: In the description of the present disclosure provided below, signaling (e.g., information/data/channel/-signal, etc.) or a set of signaling between a specific node (e.g., a UE, a network, etc.) and another node may be interpreted, even without explicit mention, as signaling or a set of signaling in step 3 that is generated as a result of an operation based on an AI/ML model. For example, this may correspond to an output resulting from inference of the AI/ML model illustrated in FIG. 2. If signaling between nodes is not required as a result of an operation based on the AI/ML model in the present disclosure, step 3 may be omitted. When a one-side model is used in the present disclosure, unidirectional/bidirectional signaling (set) in the present disclosure may correspond to the signaling in step 3. In addition, when a two-side model is used in the present disclosure, unidirectional/bidirectional signaling in the present disclosure may also correspond to the signaling in step 3, and in addition, repetitive signaling operations may also correspond to the signaling in step 3.

For example, in AI/ML model-based BM, the base station may transmit to the UE one or more beams predicted based on the AI/ML model as candidates to allow the UE to determine an optimal beam. In addition, the UE may report, to the base station, beam(s) predicted based on the AI/ML model as candidates in order to request transmission of candidate beams from the base station for determining an optimal beam.

**C-2. THz communication**

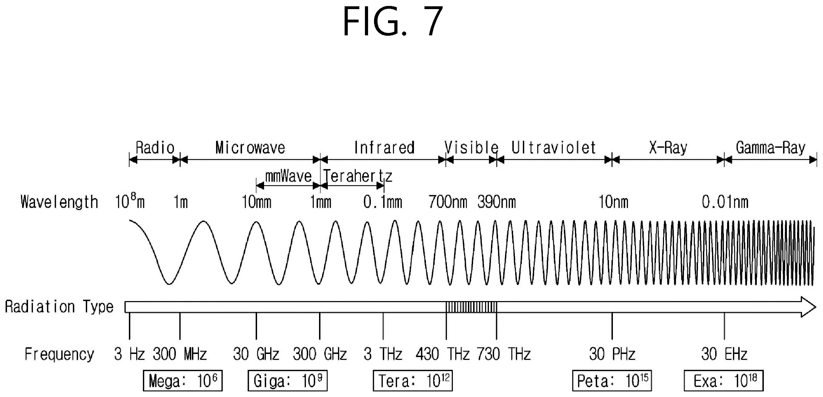

The data transmission rate may be increased by expanding the bandwidth. This may be achieved by using sub-THz communication with a wide bandwidth and applying advanced massive MIMO technology. THz waves, also known as sub-millimeter radiation, generally refer to a frequency band between 0.1 THz and 10 THz with a corresponding wavelength range of 0.03 mm to 3 mm. The 100 GHz-300 GHz frequency range (sub-THz band) is considered the main portion of the THz band for cellular communication. Adding the sub-THz band to the mmWave band increases the capacity of 6G cellular communication. Among the defined THz bands, the 300 GHz-3 THz range belongs to the far-infrared (IR) frequency region. The 300 GHz-3 THz range is part of the optical band but lies at its boundary, immediately following the RF band. Therefore, this 300 GHz-3 THz range exhibits similarity to the RF band. FIG. 7 illustrates an example of an electromagnetic spectrum applicable to the present disclosure. The embodiment of FIG. 7 may be combined with various other embodiments. Key characteristics of THz communication include (i) widely available bandwidth that supports extremely high data transmission rates, and (ii) high path loss occurring at high frequencies (high-directionality antennas are indispensable). The narrow beamwidth generated by high-directionality antennas reduces interference. The short wavelength of THz signals allows a much larger number of antenna elements to be integrated into devices and base stations operating in this band. This enables the use of advanced adaptive array techniques that can overcome range limitations.

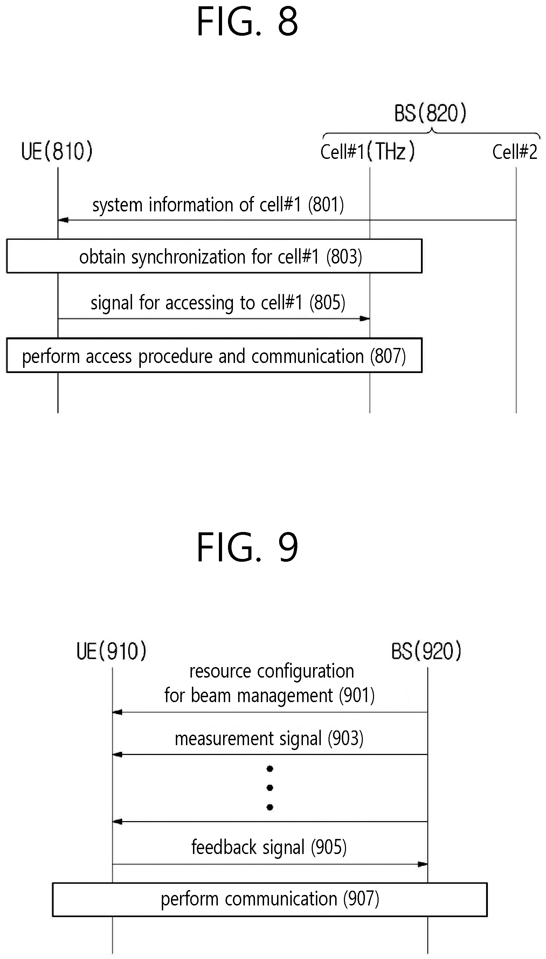

In the THz frequency band, transmitting system information (i.e., information related to attributes, characteristics, and/or capabilities of a base station necessary for service use, such as MIB and SIB) may be inefficient because, in high-frequency bands, the beamwidth becomes narrower, requiring more frequent beam sweeping to cover the entire area of the cell. In particular, when there are few users within the cell, transmitting system information through such a method becomes even more inefficient. Accordingly, a system information transmission procedure such as that illustrated in FIG. 8 may be used.

(System information reception method)

FIG. 8 illustrates an example of a procedure for transmitting system information for THz communication applicable to the present disclosure. Although this example is described in consideration of a THz scenario, it may also be applied to a 6G communication environment where THz is not used. In addition, the procedure illustrated in FIG. 8 may be combined with various embodiments of the present disclosure described below. For example, the embodiments described below may be performed based on the system information obtained through the procedure illustrated in FIG. 8.

Referring to FIG. 8, in step 801, the base station 820 transmits system information of cell #1 through cell #2. That is, the base station 820 provides at least two cells, where cell #1 uses a THz frequency band, and cell #2 uses a frequency band other than the THz frequency band. Here, the system information may include at least one piece of information/-state/parameter/configuration generated at each of the higher layer and the physical layer. For example, at least one piece of information/state/parameter/configuration generated at the higher layer may include at least one of an SFN, control information configuration for SIB1 (e.g., PDCCH configuration for SIB1), information related to cell selection/entry (e.g., cell barring, cell reselection, etc.), and subcarrier spacing, and at least one piece of information/state/parameter/configuration generated at the physical layer may include at least one of an SFN, a half-frame indicator, and an SSB index. However, this is merely an example, and the system information may include information/state/parameter/configuration related to cell #1 and/or cell #2, generated at various types of physical and higher layers. For this purpose, in one example, cell #1 and cell #2 may have a relationship of a secondary cell and a primary cell.

In step 803, the UE 810 obtains synchronization for cell #1. The synchronization may be obtained by detecting a synchronization signal. Generally, synchronization is obtained before receiving system information, however, since the system information of cell #1 is received through cell #2, synchronization acquisition for cell #1 may be performed after the reception of system information. For example, the UE 810 may obtain synchronization based on the system information. However, unlike FIG. 8, in another example, the synchronization acquisition may be performed before step 801.

In step 805, the UE 810 transmits a signal for accessing cell #1. For example, the signal may include information for accessing cell #1 (e.g., a random access preamble). The structure of the signal and the resource (e.g., a channel) for transmitting the signal may be identified through the system information. Subsequently, in step 807, the UE 810 and the base station 820 perform an access procedure for cell #1 and perform communication. In this step, operations according to various embodiments described below may be performed.

The procedure described with reference to FIG. 8 may be performed when UE 801 initially accesses cell #1 of base station 820. Alternatively, a similar procedure may be performed when UE 801 performs handover to cell #1 of base station 820. However, in the case of handover, system information of cell #1 may be received from a cell of a base station other than cell #2 of base station 520. The procedure illustrated in FIG. 8 has been described as being performed between a UE and a base station. However, the procedure of FIG. 4 may be performed between other devices as well. For example, the UE may be replaced with an ambient IoT device and/or any one of devices proposed in the present disclosure. Additionally, the base station may be replaced with a TRP, a UE, and/or any one of devices proposed in the present disclosure.

Communication in the THz band is expected to experience extremely severe path loss, and to overcome this, the UE and the base station must use very sharp beams. The use of sharp beams means that the UE and the base station must perform beam control along with beamforming, and that the number of beams used becomes very large. Accordingly, a considerable amount of time is required to align transmission and reception beams between the base station and the UE. Furthermore, when the beam alignment between the base station and the UE is disturbed due to UE movement or mobility, time for re-aligning the beams is frequently required, which may cause instability of the link. Therefore, a beam management procedure such as that illustrated in FIG. 9 may be used.

(Beam search procedure in a THz communication environment)

FIG. 9 illustrates an example of a beam management procedure applicable to the present disclosure. FIG. 9 shows an example of a procedure for searching for and/or selecting beams for THz communication, but it is not limited to the THz environment, and the present disclosure may also be applied to a 6G communication environment. In addition, the procedure illustrated in FIG. 9 may be combined with various embodiments of the present disclosure described below. Here, the term beam may be interpreted as 'spatial (configuration) information', 'spatial domain filter', 'spatial domain transmission filter', 'spatial domain reception filter', or other terms (e.g., reference signal, synchronization signal block (SSB) index, transmission reception point (TRP), panel, cell, transmission point (TP), base station, or control resource-related information such as control resource set (CORESET)-related information) having an equivalent technical meaning capable of distinguishing beams.

Referring to FIG. 9, in step 901, the base station 920 configures resources for beam management. Here, the resources may include at least one of time-frequency resources, channels, and spatial resources (e.g., antenna ports). For example, the base station 920 may utilize a beam search signal (BSS) that is transmitted spatially separated from existing downlink signals/channels for beam search. Here, the BSS may be transmitted based on dedicated ports for beam search. The dedicated ports may be different from ports used for transmission of existing downlink signals/channels (e.g., synchronization signals such as SSBs, or data channels such as PDSCH). The term BSS is defined for convenience of explanation, and the technical idea according to this embodiment is not limited to the term BSS itself. That is, a signal transmitted based on dedicated ports defined/configured for beam search may be included in the technical idea of this embodiment.

In step 903, the base station 920 transmits measurement signals by using a plurality of transmission beams. For example, the measurement signals may include at least one of reference signals and synchronization signals. In this case, the measurement signals may be transmitted for as many beams as those requiring measurement and may be transmitted using a multi-beam transmission method that forms multiple beams simultaneously to reduce sweeping time. Here, the multi-beam transmission may be performed based on at least one of a multi-panel, a sub-array, and a true time delay (TTD).

In step 905, the UE 910 transmits a feedback signal to the base station 920. The feedback signal indicates at least one beam selected by the UE 910. The UE 910 may select at least one preferred beams based on the measurement signals received in step 903. In step 907, the UE 910 and the base station 920 perform communication. At this time, the UE 910 and the base station 920 may perform communication by using the beam selected in step 905. When channel reciprocity is established, the transmission beam of the UE 910 may also be determined through steps 903 and 905, and therefore, the transmission operation of the UE 910 may be performed by using the beam selected in step 905. If channel reciprocity is not established, a procedure including transmission of measurement signals by the UE 910 and transmission of a feedback signal by the base station 920 may be performed in advance to determine the transmission beam of the UE 910. In step 907, operations according to various embodiments described below may be performed.

The procedure illustrated in FIG. 9 has been described as being performed between a UE and a base station. However, the procedure of FIG. 9 may be performed between other devices as well. For example, the UE may be replaced with an ambient IoT device and/or any one of devices proposed in the present disclosure. Additionally, the base station may be replaced with a TRP, a UE, and/or any one of devices proposed in the present disclosure.

## C-3. Non-terrestrial networks (NTN)

An NTN may refer to a network or network segment that uses radio frequency (RF) resources mounted on a satellite (or an unmanned aerial system (UAS) platform). The use of NTN services has been considered to provide wireless communication services in areas where wider coverage is required or where the installation of terrestrial base stations is difficult. The NTN service may collectively refer to a wireless communication system that provides service to UEs by installing base stations on non-terrestrial platforms such as satellites (e.g., geostationary orbit, low Earth orbit, or medium Earth orbit satellites), airplanes, unmanned airships, or drones. The satellite described in the present disclosure may move at high speed relative to a specific location on Earth, and a satellite beam directed toward Earth may correspond to an area on Earth where the satellite can provide service to users.

In one example of the present disclosure, an NTN scenario may be classified into a geostationary cell scenario and a moving cell scenario on Earth, depending on the type of cell supported by the satellite. The geostationary cell scenario refers to a scenario in which a cell is permanently maintained or maintained for a specific service duration within a location on the specific surface based on the beam steering function of the satellite. The moving cell scenario refers to a scenario in which the beam steering function of the satellite is not used, and the service is provided through fixed beams, causing the cell on the surface to continuously move.

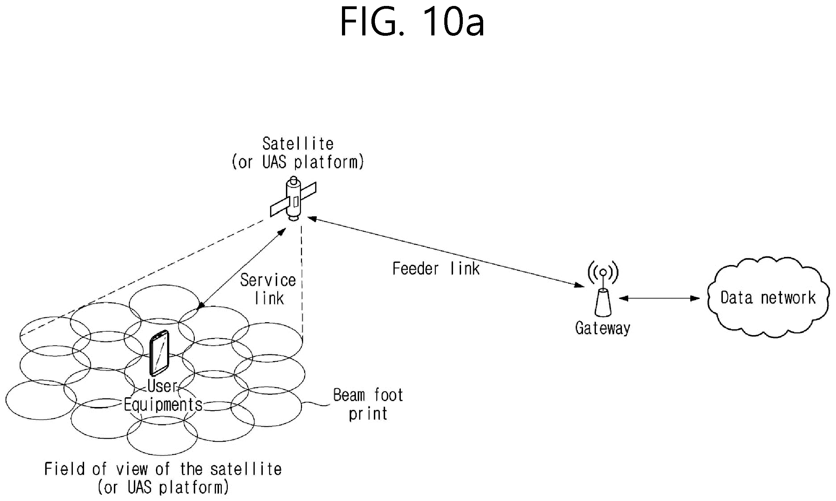

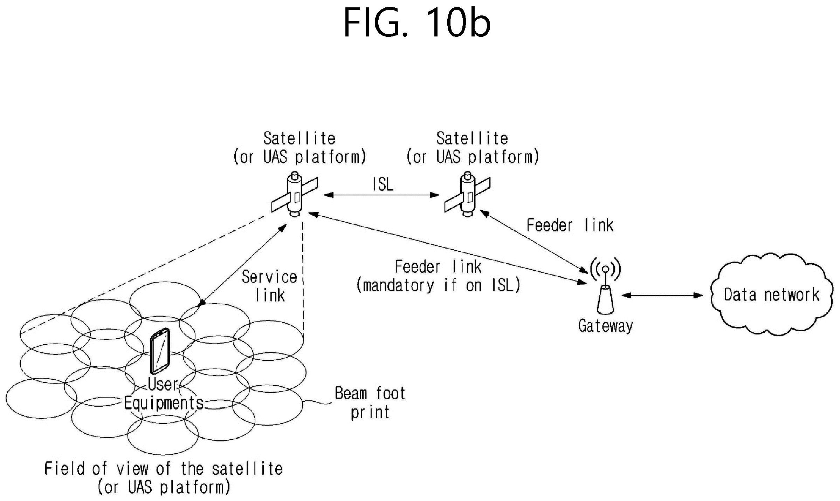

In another example of the present disclosure, an NTN scenario may be classified into a typical NTN scenario based on a transparent payload and a typical NTN scenario based on a regenerative payload, depending on the characteristics of the payload. FIG. 10a illustrates an example of a typical NTN scenario based on a transparent payload applicable to the present disclosure. FIG. 10b illustrates an example of a typical NTN scenario based on a regenerative payload applicable to the present disclosure. The embodiments of FIG. 10a or FIG. 10b may be combined with various embodiments of the present disclosure. Referring to FIG. 10a, a satellite (or a UAS platform) may establish a service link with a UE. The satellite (or UAS platform) may be connected to an NTN gateway through a feeder link. The satellite may be connected to a data network through the gateway. A beam footprint may refer to an area in which signals transmitted by a satellite can be received. Referring to FIG. 10b, a satellite (or a UAS platform) may establish a service link with a UE. The satellite (or UAS platform) connected to the UE may be connected to another satellite (or UAS platform) through inter-satellite links (ISLs). The other satellite (or UAS platform) may be connected to a gateway through a feeder link. Based on a regenerative payload, the satellite may be connected to a data network through another satellite and the gateway. When there is no inter-satellite link (ISL) between satellites, a feeder link between the satellite and the gateway may be required. FIG. 10a and FIG. 10b are merely examples of NTN scenarios, and the NTN may be implemented based on various types of scenarios. For example, a satellite (or a UAS platform) may implement a transparent payload or a regenerative (with on board processing) payload. For example, a satellite (or a UAS platform) may generate multiple beams over a designated service area according to the field of view of the satellite (or UAS platform). For example, the field of view of the satellite (or UAS platform) may vary depending on the onboard antenna diagram and the minimum elevation angle. For example, a transparent payload may include radio frequency filtering, frequency conversion, and amplification. Therefore, a waveform signal repeated by the payload may remain unchanged. For example, a regenerative payload may include radio frequency filtering, frequency conversion and amplification, demodulation/decoding, switching and/or routing, and coding/modulation. For example, the regenerative payload may be substantially equivalent to equipping the satellite (or UAS platform) with all or part of base station functionality.

Hereinafter, procedures for maintaining network service continuity and satellite coverage in a wireless communication system utilizing NTN elements (e.g., initial cell selection, mobility management in idle mode, and mobility management in connected mode) is described.

- Initial cell selection procedure

The UE may search for a first satellite-based NTN cell (or a satellite broadcasting the cell) when power is turned on. At this time, if the UE has satellite orbit information (i.e., ephemeris data) and/or RTT (round-trip time) information that can be used when performing a cell entry procedure (e.g., a random access procedure), the UE may use such information to shorten the cell search procedure and reduce the time required for cell search. To this end, the UE may require (initial) system information including satellite orbit (ephemeris) information for identifying the precise location of the cell, and the (initial) system information may be configured/determined/generated based on orbital plane information already held by the UE. For example, satellite-level orbit parameters for all satellites that can provide service to the UE through the UE uSIM, including satellite ID or index, may be provided in advance. Subsequently, since the system information includes and broadcasts the satellite ID of the serving satellite, the UE may use this to derive orbit data (ephemeris data) related to the serving satellite stored in the uSIM and/or the positional coordinates of the serving satellite. Additionally, to assist with mobility handling, the UE may obtain information related to neighboring satellites through system information and/or dedicated RRC signaling.

Here, the satellite orbit (ephemeris) information transmitted to the UE through system information and/or RRC signaling may be implemented/supported in i) a position and velocity state vector orbit format, and ii) an orbital parameter (ephemeris) format. For example, the position and velocity state vector orbit format may consist of 17 bytes or less (e.g., 132 bits). The field size for position (x, y, z) (in meters) may be 78 bits, and the field size for velocity (vx, vy, vz) (in meters per second) may be 54 bits.

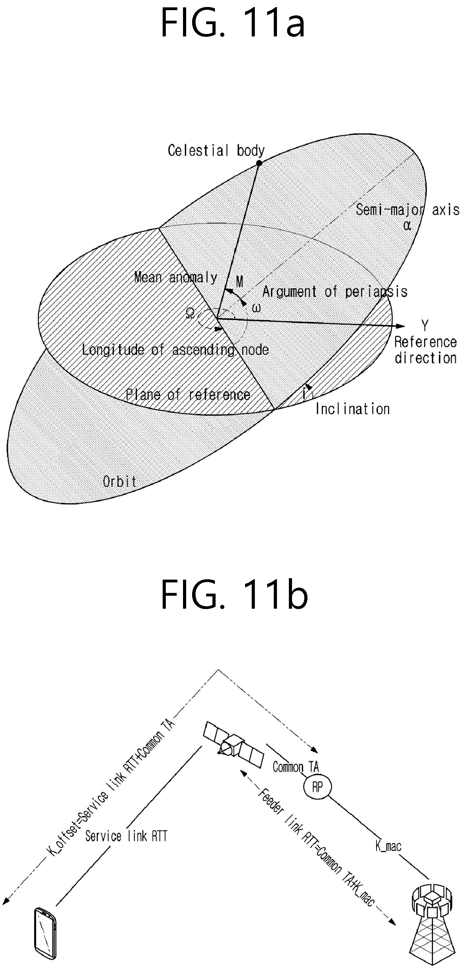

The orbital parameter ephemeris format may consist of 21 bytes or less (e.g., 164 bits). FIG. 11a illustrates an example of components of the orbital parameter ephemeris format. The components of the orbital parameter ephemeris format illustrated in FIG. 11a are as follows.

- Semi-major axis (half of the major axis of the elliptical satellite orbit) "$\alpha$" [m] (e.g., 33 bits)
- Eccentricity "e" (in an elliptical satellite orbit, where 0 < e < 1) (e.g., 20 bits)
- Argument of periapsis (the angle measured from the ascending node to the periapsis (the point closest to the central body), determining the orientation of the ellipse within the orbital plane) "$\omega$" [rad] (e.g., 28 bits)
- Longitude of ascending node (the angle measured counterclockwise from a reference point (e.g., the vernal equinox in the solar system) to the ascending node (the point where the orbit passes from below to above the reference plane)) "$\Omega$" [rad] (e.g., 28 bits)
- Inclination (the tilt of the ellipse relative to the reference plane, measured as the angle between the orbital plane and the reference plane at the ascending node) "i" [rad] (e.g., 27 bits)
- Mean anomaly (an angle that changes continuously over time, mathematically convenient but not corresponding to a geometric angle) "M" = M(t0) at the epoch t0 [JD] (e.g., 28 bits) [rad]
- Mobility management in idle mode

During the idle mode, the location of the UE may be identified at the tracking area level or unit. Here, a tracking area is defined as a set of cells, and each cell may belong to a tracking area identified by a tracking area code (TAC). The TAC may be transmitted through system information of a broadcast channel. Multiple cells may belong to the same tracking area, and the same TAC corresponding to the same tracking area may be broadcast. The location of the UE may be known to the network when the UE is first turned on (i.e., when performing a registration procedure). The registration request message transmitted by the UE for the registration procedure may include the TAC of the cell on which the UE is currently camped. When the UE moves and changes cells, it may determine the tracking area of the new cell by decoding the system information of the changed cell. The UE may move within the same tracking area without performing an update. When the UE enters a new cell using a different TAC, the UE may perform registration in the new cell and transmit the new TAC to update its location to the network. Accordingly, as the tracking area becomes larger, signaling from the UE to the network decreases, thereby minimizing UE power consumption. When the network needs to reach a UE in idle mode (e.g., for an incoming call), the network may page the UE in all cells belonging to the last tracking area where the UE performed registration. If the tracking area is very large and includes many cells, the number of paging messages may increase because the network pages the UE in all cells belonging to the TAC. When the same model is applied to a satellite system and each satellite broadcasts a TAC, the tracking area may sweep across the ground as the satellite orbits the Earth. In this case, even a stationary UE would need to perform registration updates frequently, which could affect the battery life of the UE and increase uplink signaling. To address this issue, the system may be designed so that the tracking area does not change its geographical position on Earth. Instead of the tracking area moving as the satellite moves, the satellite may change its tracking area when entering a new geographical region, and the TAC broadcast by the satellite may be updated to reflect the corresponding new geographical region. At the same time, when the UE detects a new TAC on the broadcast channel, it may perform a tracking area update procedure. Accordingly, if the UE does not change its physical location on Earth, its tracking area may remain fixed.

[0132] - Mobility management in connected mode

While the UE is in the connected mode, the mobility management procedure may be handled through a handover. In terrestrial networks or NTN networks, the handover may be triggered by the network (i.e., measurement-based handover triggering) based on measurement values reported by the UE for the signal quality of the current cell and neighboring cells. In the handover procedure, the service interruption time is defined as the time from when the UE stops transmission and reception with the source base station to when the UE resumes transmission and reception with the target base station. Meanwhile, the interruption time may differ between uplink and downlink. In the downlink, the interruption time may be defined as the time from when the network transmits a synchronized RRC reconfiguration message to when the target base station receives an RRC Reconfiguration Complete message. After transmitting the RRC reconfiguration message, the base station can no longer send data and may resume communication only after receiving the RRC Reconfiguration Complete message. In the uplink, the UE may potentially continue transmitting data to the source base station until the synchronized RRC reconfiguration message is received. Then, the interruption time may be defined as the time from when the UE receives the synchronized RRC reconfiguration message to when the target base station receives the RRC Reconfiguration Complete message.

Since the propagation delay value in a satellite-based NTN is much greater than that in a terrestrial system, additional waiting time may occur for mobility-related signals such as measurement reporting, reception of a handover (HO) command, and HO request/acknowledgment (when the target cell is served by another satellite). The geostationary Earth orbit (GEO) scenario is characterized by a much larger propagation delay compared to the low Earth orbit (LEO) scenario, but the latter requires consideration of satellite movement. To prevent extended service interruption, the waiting time related to mobility-related signaling needs to be addressed in both cases. In addition to the measurement-triggered handover described above, handover triggering based on the position of the UE and satellite (or the distance between the UE and the satellite), handover triggering based on the timing advance (TA) of the target cell, handover triggering based on deterministic satellite motion/local time, handover triggering based on the elevation angle of the source/target cell, etc. may be utilized. Additionally or alternatively, the UE may be pre-provided with handover configuration and handover triggering conditions (e.g., the position of the UE/satellite, or the strength of signals transmitted by the UE/satellite). For example, the UE may receive handover configuration and handover triggering conditions through information related to a new cell that will serve as a handover target. Accordingly, the UE may monitor the handover conditions and, when the conditions are satisfied, perform handover to the target cell.

Meanwhile, as described above, since a wireless communication system utilizing NTN elements has a much larger RTT value compared to a terrestrial communication system, various types of offsets and TA values may be configured/defined/indicated/signaled for efficient time and frequency synchronization. Hereinafter, offsets (e.g., K_offset and k_mac), TA values, validity duration, and epoch time for time/frequency synchronization in an NTN-based wireless communication system will be described.

- K_offset and k_mac

FIG. 11b illustrates examples of offsets in a link related to a satellite. The K_offset illustrated in FIG. 11b represents an offset value corresponding to the RTT of the uplink time synchronization reference point (RP). Here, K_offset may correspond to the sum of the service link RTT and the common TA (if indicated). The k_mac illustrated in FIG. 11b represents an offset value corresponding to the RTT between the RP and the base station. For example, K_offset may be applied to i) PUSCH transmission timing based on DCI and the DCI-scheduled PUSCH, ii) PUSCH transmission timing based on a random access response (RAR), iii) PUSCH transmission timing based on a configured grant, iv) PUCCH transmission timing according to MsgB, and v) transmission timing of non-periodic SRS/CSI resources. For example, k_mac may be applied to UE actions and assumptions related to downlink configuration indicated by MAC-CE command on the PDSCH. In a beam failure recovery procedure, for PRACH transmission in uplink slot n, the UE may monitor the corresponding PDCCH starting from downlink slot "n + k_mac + 4" within the corresponding RAR window.

The cell-specific K offset may be signaled through system information related to NTN (e.g., an NTN-specific SIB). A range of cell-specific K_offset values (0 to 1023 ms) may be used to cover all scenarios. A differential UE-specific K_offset may be signaled through MAC CE, and the corresponding differential UE-specific value range may be 0 to 63 ms. The total UE-specific K_offset value equals the cell-specific K_offset value minus the differential UE-specific K_offset value. The k_mac may be provided by the network when the downlink and uplink frame timings are not aligned at the base station. Updating of k_mac is not supported, and its value range may be from 1 to 512 ms. When the UE does not receive a k_mac value from the network, the UE may assume k_mac = 0. In FR1, the reference SCS value for the unit of K offset may be 15 kHz.

- UE-specific TA and common TA

In an NTN-based communication system, the UE may calculate a timing advance (TA) based on the UE's GNSS (global navigation satellite system) capability (e.g., UE location) and higher layer parameters related to satellite ephemeris transmitted from the base station, and this is referred to as a UE-specific TA ( $N_{TA,adj}^{UE}$ ). When the higher layer parameters related to satellite ephemeris are not received from the base station, the UE-specific TA may be set to 0. Then, the TA calculated based on the common TA parameters (e.g., TACommon, TACommonDrift, and/or TACommonDriftVariation) transmitted from the base station as higher layer parameters is referred to as the common TA ( $N_{TA,adj}^{common}$ ). When the common TA parameters are not transmitted from the base station, the common TA may be set to 0. Accordingly, in an NTN-based communication system, the total TA value (T_TA) may be calculated as $N_{TA} + N_{TA,offset} + N_{TA,adj}^{common} + N_{TA,adj}^{UE}$. Here, N_TA,offset means a TA offset value provided to the UE for each serving cell, and N_TA means a value derived based on a timing advance command.

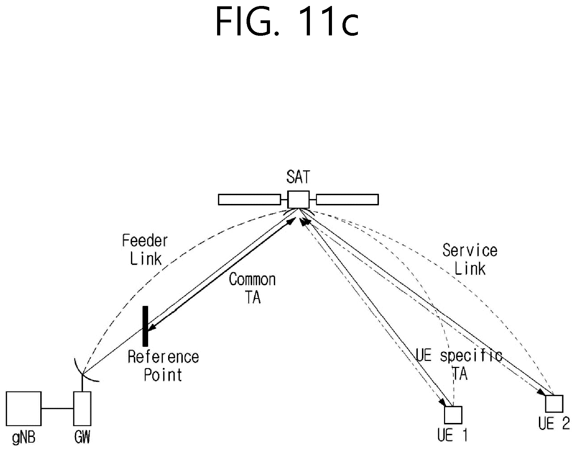

FIG. 11c illustrates examples of timing advance (TA) values in a link related to a satellite. As shown in FIG. 11c, the UE-specific TA is calculated to compensate for the transmission delay over the service link, while the common TA is calculated to compensate for the transmission delay between the RP and the satellite.

- Valid duration and epoch time

The validity duration refers to the (maximum) time interval during which the UE may apply previously obtained assistance information (e.g., serving and/or neighboring satellite ephemeris and common TA parameters, etc.) without obtaining new assistance information (from the epoch time). Configuration information related to the validity duration may be broadcast by the base station for each cell through system information related to NTN (e.g., SIB19). For example, the validity duration range may consist of {5s, 10s, 15s, 20s, 25s, 30s, 35s, 40s, 45s, 50s, 55s, 60s, 120s, 180s, 240s, 900s}, but is not limited thereto. A validity timer configured with the validity duration value may (re)start at the epoch time of the assistance information. If new or additional assistance information is unavailable within the validity duration, the UE may assume that uplink synchronization has been lost.

The serving satellite ephemeris and common TA parameters may be signaled in the same SIB message and may share the same epoch time. When the epoch time is explicitly provided through the SIB, the epoch time of the assistance information (i.e., satellite ephemeris and common TA parameters) corresponds to the start time of the DL subframe indicated by the SFN and the subframe number signaled together with the assistance information. When the epoch time is not explicitly indicated through the SIB, the epoch time of the assistance information may be implicitly known as the end of the SI window in which the NTN-specific system information (e.g., SIB19) is transmitted. When the epoch time is provided through dedicated signaling, the epoch time of the assistance information corresponds to the start time of the DL subframe and may be represented by the SFN and the subframe number.

In the case of a serving cell, when the epoch time is explicitly indicated by the SFN and subframe number, the UE may consider the corresponding frame as the next SFN following the frame in which the message indicating the current SFN or epoch time is received. In the case of a neighboring cell, when the epoch time is explicitly indicated by the SFN and subframe number, the UE may consider the corresponding frame as the frame closest to the frame in which the message indicating the epoch time is received.

**C-4. Integrated sensing and communication (ISAC)**

Radio sensing is a technology that can obtain information about the characteristics of an environment and/or objects within the environment by identifying instantaneous flux velocity, angle, and distance (range) of objects using radio frequencies. Because the radio frequency sensing function does not require connecting an object to a device through the network, it may provide object-positioning services without the need for dedicated devices. The ability to obtain range, velocity, and angle information from radio frequency signals may enable a wide range of new functions, such as object detection, object recognition (e.g., vehicles, humans, animals, UAVs), high-precision positioning, tracking, and activity recognition. Radio sensing services may provide information to various industries (e.g., unmanned aerial vehicles, smart homes, V2X, factories, railways, public safety, etc.) that enable applications such as intrusion detection, assisted driving and navigation, trajectory tracking, collision avoidance, traffic management, and health or transportation monitoring. In some cases, radio sensing may use non-3GPP-type sensors (e.g., radar, cameras) to additionally support 3GPP-based sensing. For example, the operation of a wireless sensing service, i.e., the sensing operation, may depend on the transmission, reflection, and scattering of wireless sensing signals. Therefore, radio sensing may provide an opportunity to enhance existing communication systems from communication networks into radio communication and sensing networks.

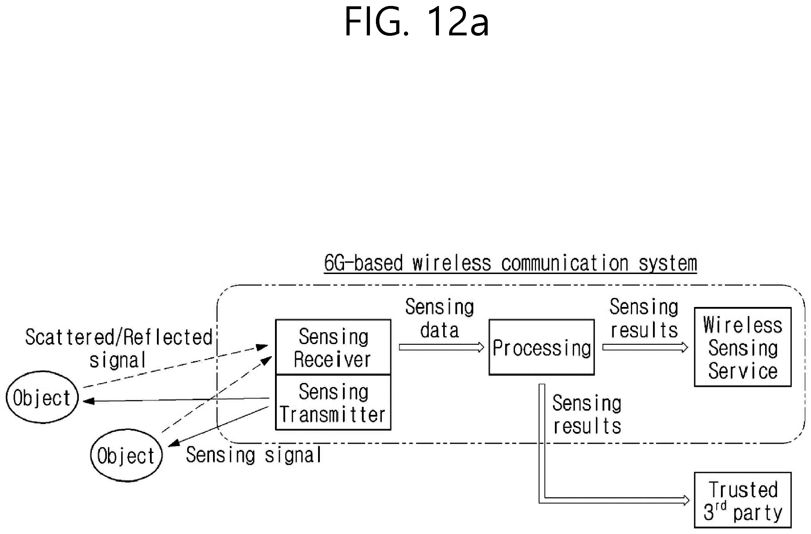

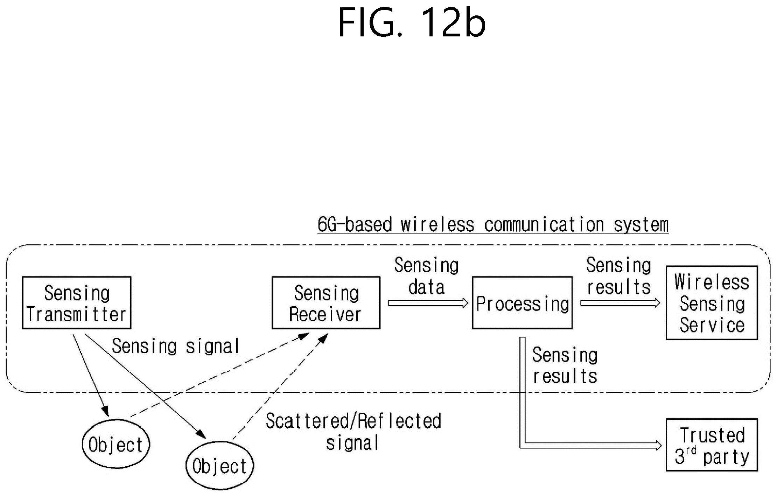

FIG. 12a and FIG. 12b illustrate examples of sensing operations applicable to the present disclosure. The embodiments shown in FIG. 12a and FIG. 12b may be combined with various embodiments of the present disclosure. Specifically, FIG. 12a illustrates an example of sensing (e.g., monostatic sensing) using a sensing receiver and a sensing transmitter located at the same position, and FIG. 12b illustrates an example of sensing (e.g., bistatic sensing) using a separated sensing receiver and sensing transmitter.

For example, in a wireless communication system based on a 6G network of the present disclosure, referring to FIG. 12a, a sensing transmitter and a sensing receiver may be configured to be included in a single base station (i.e., the same base station), or a single UE (i.e., the same UE). Alternatively, the sensing transmitter and/or the sensing receiver may include an ambient IoT device. In contrast, referring to FIG. 12b, the sensing transmitter and the sensing receiver may be configured to be included in different base stations, included in different UEs, or included in a UE and a base station, respectively.

In this regard, based on whether the sensing transmitter and the sensing receiver are included in a base station or a UE, six types of sensing modes may be defined as follows:

- Mode 1: A mode in which the sensing transmitter and sensing receiver are included in a single base station (e.g., a base station-based sensing mode in a monostatic mode)
- Mode 2: A mode in which the sensing transmitter is included in a first base station and the sensing receiver is included in a second base station different from the first base station (e.g., a base station-based sensing mode in a bistatic mode)
- Mode 3: A mode in which the sensing transmitter is included in a base station and the sensing receiver is included in a UE (e.g., a base station-to-UE sensing mode)
- Mode 4: A mode in which the sensing transmitter is included in a UE and the sensing receiver is included in a base station (e.g., a UE-to-base station sensing mode)
- Mode 5: A mode in which the sensing transmitter and sensing receiver are included in a single UE (e.g., a UE-based sensing mode in a monostatic mode)
- Mode 6: A mode in which the sensing transmitter is included in a first UE and the sensing receiver is included in a second UE different from the first UE (e.g., a UE-based sensing mode in a bistatic mode)

In a wireless communication system based on a 6G network according to the present disclosure, one or more of the six types of sensing modes described above may be used independently or in combination.

In connection with the sensing operations illustrated in FIG. 12a and FIG. 12b, a sensing transmitter may transmit a sensing signal for sensing one or more objects (and/or the environment surrounding the objects). For example, the sensing signal may correspond to a radio (frequency) signal defined to be transmittable by a base station or a UE in a wireless communication system based on the 6G network of the present disclosure. A sensing receiver may receive a signal that has been scattered or reflected by one or more objects (and/or the environment surrounding the objects) from the sensing signal transmitted by the sensing transmitter. At the sensing receiver, sensing data may be derived from the scattered/reflected signal, and sensing results may be generated or obtained through processing of the sensing data. Here, the sensing results may include characteristic information (e.g., position, distance, velocity, angle, etc.) of one or more objects (and/or the environment surrounding the objects). The sensing results generated or obtained in this manner may be used for radio sensing services (e.g., detection or tracking of objects and/or environments) provided by the wireless communication system based on the 6G network of the present disclosure, or may be provided/disclosed to a trusted third party.

Additionally, although the sensing operations in FIG. 12a and FIG. 12b are described as representative examples of operations in a wireless communication system based on a 6G network, they may also be extended and applied to cases where UEs/base stations/signals based on previous generations (e.g., 4G, 5G, etc.) are utilized.

Furthermore, with respect to radio sensing described in the present disclosure, in a wireless communication system based on a 6G network according to the present disclosure, the time/frequency resources for sensing operations and the time/frequency resources for general communication (e.g., UL/DL/sidelink-based communication) may be separately scheduled/configured.

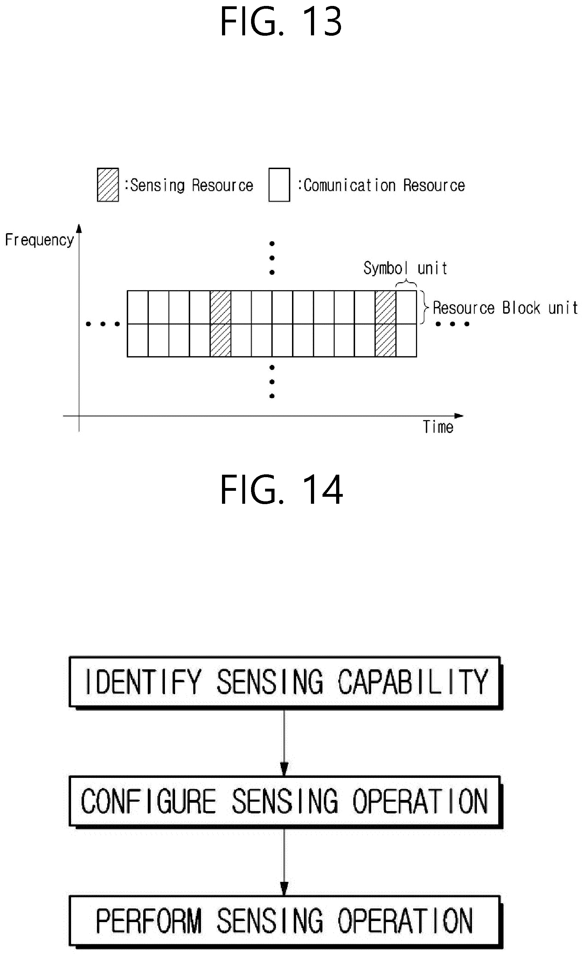

FIG. 13 illustrates an example of time/frequency resources for sensing operations applicable to the present disclosure. The embodiment of FIG. 13 may be combined with various embodiments of the present disclosure.

Referring to FIG. 13, time/frequency resources (hereinafter, sensing resources) for the above-sensing operation (e.g., sensing operation based on FIG. 12a and FIG. 12b) may be configured/allocated separately from time/frequency resources (hereinafter, communication resources) for general communication.

For example, as illustrated in FIG. 13, the sensing resources may be configured or allocated in units of symbols in the time domain and/or in units of resource blocks in the frequency domain. Resources other than those configured or allocated as sensing resources may be used as resources for general communication. That is, the sensing resources and communication resources may be configured or allocated based on a time-division multiplexing (TDM) scheme and/or a frequency-division multiplexing (FDM) scheme in terms of base station/UE operations. Additionally or alternatively, unlike the example shown in FIG. 13, the sensing resources may be configured or allocated based on other units in the time domain (e.g., slot, frame, or absolute time such as ms or $\mu s$) and/or other units in the frequency domain (e.g., subcarrier, carrier, or absolute frequency such as MHz or GHz).

Additionally or alternatively, with respect to the configuration/allocation/scheduling of resources for general communication described in the present disclosure, the relationship between such resources and the sensing resources described above may need to be considered. For example, when configuring or allocating resources for general communication according to embodiments of the present disclosure, such resources may be configured/allocated to perform rate matching or puncturing for the resource region corresponding to the sensing resources. For example, when scheduling resources for general communication according to embodiments of the present disclosure, such resources may be scheduled so as not to overlap with the resource region corresponding to the sensing resources. If, in embodiments of the present disclosure, the resources for general communication and the resource region corresponding to the sensing resources are configured/allocated/scheduled to overlap, either or both operations may be dropped, skipped, or postponed based on priority or predefined rules. That is, in embodiments of the present disclosure, it may be preferable that the resources related to general communication (e.g., resources for signals/channels related to UL/DL/sidelink-based data/control) be configured/allocated/scheduled so as not to overlap with the sensing resources described above.

Additionally, with respect to the radio sensing described in the present disclosure, various channel modeling methods may be applied. Channel modeling related to sensing may refer to constructing a path for transmitting and/or receiving sensing signals and/or scattered/reflected signals, considering the object to be sensed and/or the environment to which the object belongs. Since channel modeling may be related to the performance and requirements of sensing in a wireless communication system, it may be an important aspect for verifying the feasibility of the sensing function.

The channel related to sensing may be classified into a channel between an object (e.g., a target of interest) and the sensing transmitter/receiver, and a channel between the environment to which the object belongs and the sensing transmitter/receiver. In this regard, channel modeling related to sensing may be classified based on the sensing mode (e.g., the six types of modes described above), whether the focus is on an object or an environment, and/or the sensing scenarios. For example, channel modeling for a target in a base station/UE-based monostatic sensing mode, channel modeling for a target in a base station/UE-based bistatic sensing mode, channel modeling for an environment in a base station/UE-based monostatic sensing mode, and channel modeling for an environment in a base station/UE-based bistatic sensing mode may each be differently optimized and configured. For example, when various sensing scenarios are classified, channel modeling may be categorized into channel modeling for detection, location, and tracking scenarios, channel modeling for motion recognition, and channel modeling for imaging or environmental reconstruction scenarios. Additionally, channel modeling related to sensing may be based on a statistical channel modeling technique and/or a deterministic channel modeling technique. For example, modeling for sensing in a wireless communication system based on the 6G network of the present disclosure may be based on a stochastic geometry channel modeling technique and/or a hybrid channel modeling technique including ray tracing channel modeling. Here, the stochastic geometry channel model may be based on various statistical characteristics of channel conditions. In addition, the hybrid channel model may be based on both the ray tracing technique and the stochastic technique. In the case of the hybrid approach, channel modeling for objects (e.g., targets of interest) that require high accuracy and consistency may be performed using the ray tracing technique, while channel modeling for the environment may be performed using the stochastic technique.

FIG. 14 illustrates an example of a procedure related to sensing operations applicable to the present disclosure. The embodiment of FIG. 14 may be combined with various embodiments of the present disclosure.

For example, in a wireless communication system based on the 6G network of the present disclosure, in the case of a sensing operation in which a UE participates, the base station may need to identify the capability of the UE related to the sensing operation. In this regard, the UE may be configured to report capability information to the base station indicating whether it supports the sensing operation. Additionally or alternatively, if the UE is predefined by specification to support sensing operations, such a procedure may be omitted. Furthermore, in the case of a sensing operation in which only the base station participates, the base station may be configured to report capability information indicating whether it supports the sensing operation to the entity (e.g., a higher-layer network entity above the base station) that configures or controls its sensing operation.

For example, the base station may perform signaling with the UE to exchange configuration information related to the sensing operation. For example, the base station may configure or indicate to the UE information related to the sensing operation mode (e.g., based on the six types of modes described above), the entity of the sensing operation (e.g., sensing transmitter, sensing receiver), the resources for the sensing operation (e.g., sensing resources as shown in FIG. 13), the utilization target of sensing results (e.g., the type of radio sensing service based on the 6G network, or a trusted third party), and the channel modeling for sensing (e.g., the channel between the base station/UE and the object/environment). For example, the base station may be configured/instructed with such information from network entity at a higher level/layer of the base station.

For example, the base station and/or the UE may perform a sensing operation based on the configured/indicated information. For example, the base station and/or the UE, in the role of a sensing transmitter and/or sensing receiver, may perform procedures such as transmission of a sensing signal, reception of a scattered/reflected signal, derivation of sensing data, acquisition of sensing results through processing of the sensing data, and provision of the sensing results, as illustrated in FIG. 12a and FIG. 12b described above. In one example, in the operation of the base station/UE described in the present disclosure, the sensing results provided through the sensing operation may also be utilized.

The procedure illustrated in FIG. 14 has been described as being performed between a UE and a base station. However, the procedure of FIG. 14 may be performed between other devices as well. For example, the UE may be replaced with an ambient IoT device and/or any one of devices proposed in the present disclosure. Additionally, the base station may be replaced with a transmission and reception point (TRP), a UE, and/or any one of devices proposed in the present disclosure.

**Ambient IoT (ambient IoT, AmIoT)**

AmIoT may be a new device type or segment that operates only with energy harvested from a surrounding environment. For example, AmIoT may refer to a new type of Internet of things device that operates by being powered through various energy sources harvestable from a surrounding environment, such as radio waves, light, motion, and thermal energy. [Table 1] illustrates examples of use cases of AmIoT.

[Table 1]

| Inventory | smart labeling/identification in warehouse, supply chain, airport shipping, manufacturing, logistics, retail, etc. |
|---|---|
| Sensor | environment sensing in smart farm, smart city, smart home, smart grid, etc. |
| Positioning | location tracking and ranging in indoor/outdoor for assets, products, personal item tracking, etc. |
| Command | actuator, device activation/deactivation, electronic labeling, etc. |

In addition to the examples of [Table 1], AmIoT technology may be utilized in various ways. For example, AmIoT technology may be used in combination with various technologies described above, for example, integrated sensing and communication technology.

Active signal generation and/or backscattering may be one of communication technologies considered to achieve low-power operation of an AmIoT device. For example, backscattering is a technology widely used in radio frequency identification (RFID), and after modulating incident waves with information to be transferred, the incident waves are reflected so that the device may communicate with a network. For example, the device may be powered by an incident radio frequency (RF) signal or stored energy.

For example, an AmIoT device may be classified into various device types such as passive, semi-passive, and active according to an energy storage and transmission signal generation scheme. For example, a passive device has no energy storage device (e.g., a capacitor) and may communicate based on backscattering communication technology. For example, a semi-passive device has an energy storage device and may communicate using backscattering communication technology with the aid of the energy storage device. For example, an active device has an energy storage device and may actively generate a signal for communication by using active RF components and stored energy. For example, in the present disclosure, the following three types of IoT devices may be considered. For example, device A may be a device with no energy storage and no independent signal generation (e.g., a device supporting backscattering transmission). For example, device B may be a device with energy storage and no independent signal generation (e.g., a device supporting backscattering transmission). In this case, for example, use of stored energy may include amplification for a reflected signal. For example, device C may be a device with energy storage and independent signal generation (e.g., a device with active RF components for transmission).

For example, in indoor and outdoor scenarios, the following basic topologies may be considered to support an AmIoT device. For example, the basic topologies may include a base station-AmIoT device direct connection, a base station-intermediate node-AmIoT device connection, connection support by an auxiliary node, and/or a UE-AmIoT device connection. The basic topologies proposed in the present disclosure are merely examples, and the proposals of the present disclosure may be extended to or applied to other topologies as well.

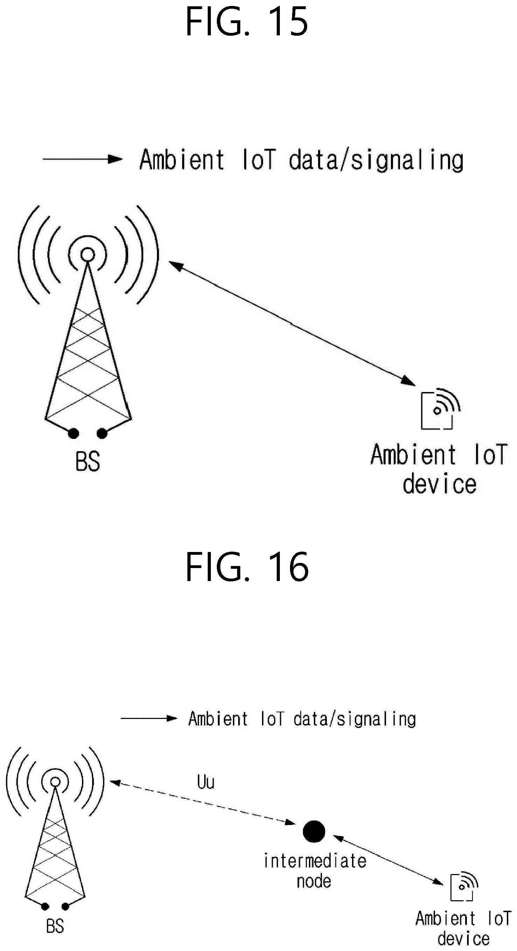

FIG. 15 illustrates a topology (e.g., topology 1) in which a base station and an AmIoT device are directly connected according to an embodiment of the present disclosure. The embodiment of FIG. 15 may be combined with various embodiments of the present disclosure.

Referring to FIG. 15, an AmIoT device may directly and bidirectionally communicate with a base station. For example, communication between the base station and the AmIoT device may include AmIoT data and/or signals. For example, the AmIoT data and/or signals may be transmitted or received based on a control channel and/or a data channel (e.g., a shared channel). In the embodiment of FIG. 15, a base station transmitting to the AmIoT device and a base station receiving from the AmIoT device may be different. For example, in topology 1, a base station in a micro-cell environment and the AmIoT device may perform mutual direct communication. For example, the base station may be located at a co-site with a base station equipped with existing 3GPP technology.

FIG. 16 illustrates a topology (e.g., topology 2) in which a base station and an AmIoT device are connected through an intermediate node according to an embodiment of the present disclosure. The embodiment of FIG. 16 may be combined with various embodiments of the present disclosure.

Referring to FIG. 16, an AmIoT device may bidirectionally communicate with an intermediate node between the device and the base station. Herein, for example, the intermediate node may be an AmIoT-capable relay, an IAB node, a UE, a repeater, etc. For example, the intermediate node may transfer AmIoT data and/or signals between the base station and the AmIoT device. For example, the AmIoT data and/or signals may be transmitted or received based on a control channel and/or a data channel (e.g., a shared channel). In the embodiment of FIG. 16, an intermediate node transmitting to the AmIoT device and an intermediate node receiving from the AmIoT device may be different. For example, in topology 2, an intermediate node may exist between a base station in a macro-cell environment and the AmIoT device. For example, the base station may be located at a co-site with a base station equipped with existing 3GPP technology. For example, the intermediate node may be limited to a UE, and the intermediate node may be located indoors.

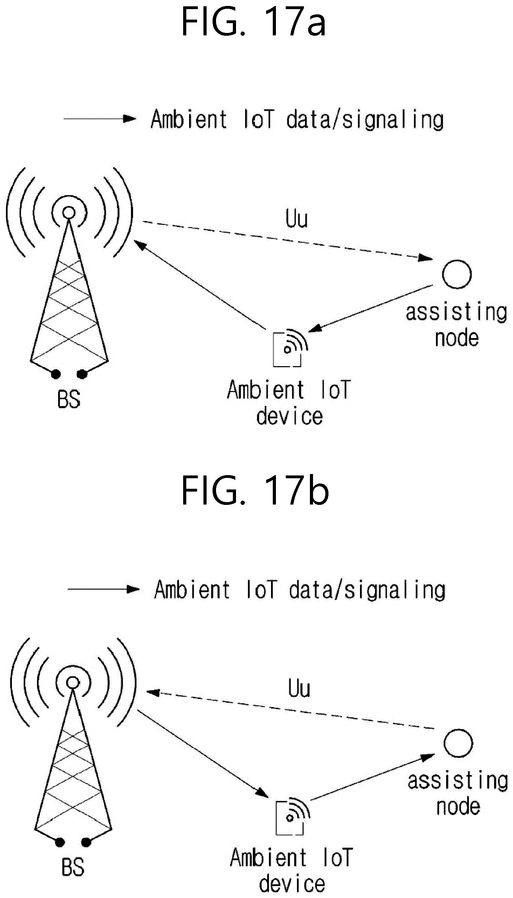

FIG. 17a and FIG. 17b illustrate topologies (e.g., topology 3) supported by an auxiliary node according to an embodiment of the present disclosure. The embodiments of FIG. 17a and FIG. 17b may be combined with various embodiments of the present disclosure.

Referring to FIG. 17a, an auxiliary node may be supported for downlink reception. For example, an AmIoT device may transfer data and/or signals to a base station, and the AmIoT device may receive data and/or signals from the auxiliary node. Referring to FIG. 17b, an auxiliary node may be supported for uplink transmission. For example, an AmIoT device may receive data and/or signals from a base station, and the AmIoT device may transfer data and/or signals to the auxiliary node. Herein, for example, the auxiliary node may be an AmIoT-capable relay, an IAB node, a UE, a repeater, etc.

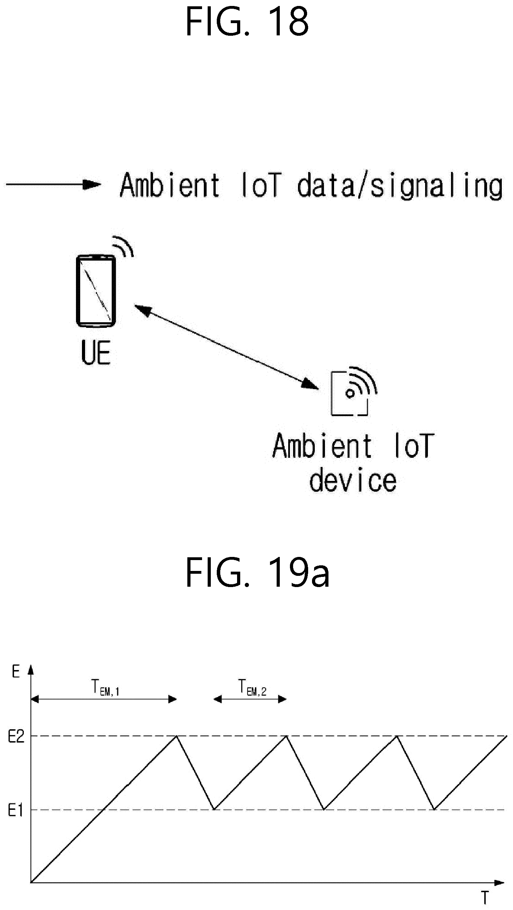

FIG. 18 illustrates a topology, e.g., topology 4, in which a UE and an AmIoT device are directly connected according to an embodiment of the present disclosure. The embodiment of FIG. 18 may be combined with various embodiments of the present disclosure.

Referring to FIG. 18, an AmIoT device may bidirectionally communicate with a UE. For example, communication between the UE and the AmIoT device may include AmIoT data and/or signals. For example, the AmIoT data and/or signals may be transmitted or received based on a control channel and/or a data channel (e.g., a shared channel).

For example, transmission by the AmIoT device may be performed in a frequency division duplexing (FDD) spectrum (e.g., an FDD uplink spectrum).

Meanwhile, in 3GPP NR release 19, a study item titled "Study on solutions for Ambient Internet of Things (IoT) in NR" has been approved. Specifically, the study item is expected to be carried out in 3GPP NR release 19 based on the following contents.

This study aims to perform further evaluation at a RAN WG level on ambient IoT, which is a new 3GPP IoT technology suitable for deployment in a 3GPP system that relies on ultra-low complexity devices with ultra-low power consumption for ultra-low-cost IoT applications. This study should provide clear differentiation, such as addressing use cases and scenarios that cannot be satisfied by existing 3GPP LPWA IoT technologies, such as NB-IoT with reduced peak transmission power.

General scope

Definitions provided in TR 38.848 apply to the present SI, and the following is an exclusive general scope:

A. The overall objective is to study a harmonized radio interface design with minimized differences for ambient IoT, if needed, to enable the following devices:

i. ~ maximum 1 μW peak power consumption, energy storage, up to 10X ppm initial sampling frequency offset (SFO), and no DL or UL amplification in the device. The UL transmission of the device is backscattered from an externally provided carrier.
ii. Hundreds of μW peak power, energy storage, up to 10X ppm initial sampling frequency offset (SFO), and both DL and/or UL amplification in the device. The UL transmission of the device may be generated within the device or backscattered from an externally provided carrier.

· X is to be decided by the WG.
· Coverage design target: maximum distance to the device of 10-50 m indoors according to TR 38.848: "... a range that WGs can sub-select within".
· For topology 1 and topology 2 with a UE as an intermediate node under network control according to TR 38.848, there is no RRC state, mobility (i.e., at least no functions such as cell selection/reselection), HARQ, or ARQ.
NOTE 1: "≤ hundreds of μW" should be understood such that the WG is not obliged to set a specific value, and determining whether a proposed design with such power consumption meets the "≤ hundreds of μW" requirement is for WG discussion.

B. Deployment scenarios with the following characteristics by referring to the table in Section 4.2.2 of TR 38.848:

· Deployment scenario 1 of topology 1

o Base station and coexistence characteristics: micro-cell, co-site

· Deployment scenario 2 of topology 2 with a UE as an intermediate node (under network control)

o Base station and coexistence characteristics: macro-cell, co-site
o The location of the intermediate node is indoor.

C. FR1 licensed spectrum in FDD.
D. Spectrum deployment in-band with NR, in guard bands with LTE/NR, and in standalone bands.
E. Traffic types with a focus on DO-DTT, DT, rUC1 (indoor inventory), and rUC4 (indoor command).

· At RAN#104, this study evaluates whether the harmonized radio interface design (according to bullet 'A' above) can address DO-A (device-based autonomous) use cases, and identifies which parts of the harmonized radio interface design (according to bullet 'A' above) are sufficient or insufficient for the DO-A use cases.

Transmissions from an ambient IoT device, including backscattering when used, may occur at least in an UL spectrum.

Within the general scope, the following objectives are configured:

1. Evaluation assumptions

a) In clause 5 (RAN design objectives) of TR 38.848 [RAN1], conclude at least the following aspects of design objectives left to the WG:

o Clause 5.3: a maximum distance target value applicable
o Clause 5.6: specification of a definition of latency suitable for use in a RAN WG
o Clause 5.8: a 2D distribution of a device

b) Define necessary additional evaluation assumptions of deployment scenarios for coverage and coexistence evaluation. [RANI, RAN4].
c) Identify basic blocks/components of possible ambient IoT device architectures by considering a latest implementation of low-power and low-complexity devices meeting RAN design objectives for power consumption and complexity. [RAN1]
d) Define link budget calculations for coverage, including whether/how to model carriers of nodes inside or outside a connection topology.

NOTE: Evaluation results of the design objectives are made within a scope of studying feasibility and necessity of proposals in the following objectives through inspection of reference implementations in the field, simulations, analytical methods, etc.
NOTE: Make efforts to minimize evaluation cases of RAN1.

2. Study solutions that are needed and feasible for ambient Internet of things as defined in the general scope, including determining which functions, procedures, and the like are needed and not needed, and ensuring at least necessary functions in Section 6.2 of TR 38.848.

The positioning study of Rel-19 is led by RAN3, and is limited to functions that do not impact specifications or minimize impacts on specifications (NOTE: this does not mean a decision on WI generation).
Study feasibility of proximity determination and necessary functions for proximity determination, wherein coordination with SA3 is required in terms of privacy.

· RANI lead:

For ambient IoT DL and UL:

o Frame structure, synchronization and timing, random access
o Numerology, bandwidth and multiple access

o Waveform and modulation
o Channel coding
o Downlink channel/signal aspects
o Uplink channel/signal aspects
o Scheduling and timing relationship
o Study necessary characteristics of a carrier waveform for an externally provided carrier to an ambient IoT device, including interference handling at an ambient IoT UL receiver and an NR base station.

For topology 2, there is no difference from topology 1 in physical layer design.

· RAN2 lead:

o Study and determine functions needed for an ambient IoT communication small protocol stack and lightweight signaling procedures to enable DO-DTT and DT data transfer, and study the functions.

For example:

■ Paging
■ Random access
■ Data transmission including necessary radio resource control aspects in compliance with limitations of the general scope
■ Interaction with higher layers

For functions not listed above, studies are performed only when determined to be essential.

· RAN3 lead:

o Identify and enable necessary impacts on signaling and procedures for a CN-RAN interface:

■ Paging
■ Device context management
■ Data transmission

o Identify RAN architecture aspects, including whether support for a split architecture is required.
o Identify potential solutions to locate an ambient IoT device without impacting specifications, for example, by reusing existing user location reports or minimizing specification impacts when transferring location information to a core network.

· RAN4 lead:

o Study coexistence between ambient IoT and NR/LTE.
o Study RF requirements for ambient IoT:

■ Ambient IoT base station transmission and reception
■ Ambient IoT device transmission and reception according to the general scope
■ Intermediate node UE transmission and reception according to the general scope

RAN2 and RAN3 are expected to cooperate with SA2 to identify RAN-CN function splits.
NOTE: This study targets an IoT segment at a much lower level than existing 3GPP IoT technologies (e.g., NB-IoT, eMTC, RedCap, etc.). This study does not aim to replace existing 3GPP LPWA technologies.
As described above, types of an AmIoT device may be classified into two types as follows. For example, a type 1 device may have a maximum power consumption value of approximately 1 uW, may be capable of energy storage, may have no amplification function, and may perform transmission by backscattering a carrier wave (CW) provided from outside, for example, a reader such as a base station or a UE, or a separate node. For example, a type 2 device may have a maximum power consumption value of approximately hundreds of uW, may be capable of energy storage, may have an amplification function, and may perform transmission by backscattering a carrier wave (CW) provided from outside, for example, a reader such as a base station or a UE, or a separate node, or by using a signal internally generated by the device itself.

For example, in addition to the classification schemes described above, a type or class of an AmIoT device may be distinguished based on parameters related to device characteristics (e.g., presence or capacity of energy storage, level of energy or power consumption, presence or capability of amplification, presence or capability of a band-pass filter (BPF), supported DL or UL transmission scheme(s), etc.) or a combination of parameters. Herein, for example, BPF capability may be distinguished by a 3-dB bandwidth of a supported BPF, sharpness, or the like, and UL transmission schemes may be distinguished, for example, into backscattering-based UL transmission and UL transmission based on internal signal generation.

Additionally, based on parameters related to the device characteristics (e.g., presence or capacity of energy storage, level of energy or power consumption, presence or capability of amplification, presence or capability of a band-pass filter (BPF), supported DL or UL transmission scheme(s), etc.) or a combination of parameters, a type or class of an AmIoT device may be further subdivided. For example, the type 2 device described above may be classified into type 2a when transmission is performed by backscattering a carrier wave (CW) provided from outside, for example, a reader such as a base station or a UE, or a separate node, and type 2b when transmission is performed using a signal internally generated by the device itself. In this case, type 2a and type 2b may be the same in that they have a maximum power consumption value of approximately hundreds of uW, are capable of energy storage, and have an amplification function.

For example, for some types or classes of AmIoT devices (e.g., device B, device C, a type 1 device, and/or a type 2 device), an energy storage capability (e.g., a capacitor or a charging battery) may be provided for the following purposes.

- Securing stable energy at a time of reception or transmission
- Operating a low-power communication module through energy storage in a low RF energy state

For example, a minimum RF reception sensitivity for operating a low-power communication module may be -20 dBm, and a minimum reception sensitivity for energy harvesting may be -20 dBm. In this case, when reception power of an AmIoT device is distributed between -30 dBm and -20 dBm, communication may not be possible without a capacitor, and communication may be possible after a charging time when a capacitor is present.

- Accumulating energy harvested based on different energy sources (e.g., solar, thermal, wind, kinetic, etc.) in a single capacitor and operating a low-power communication module at a desired time

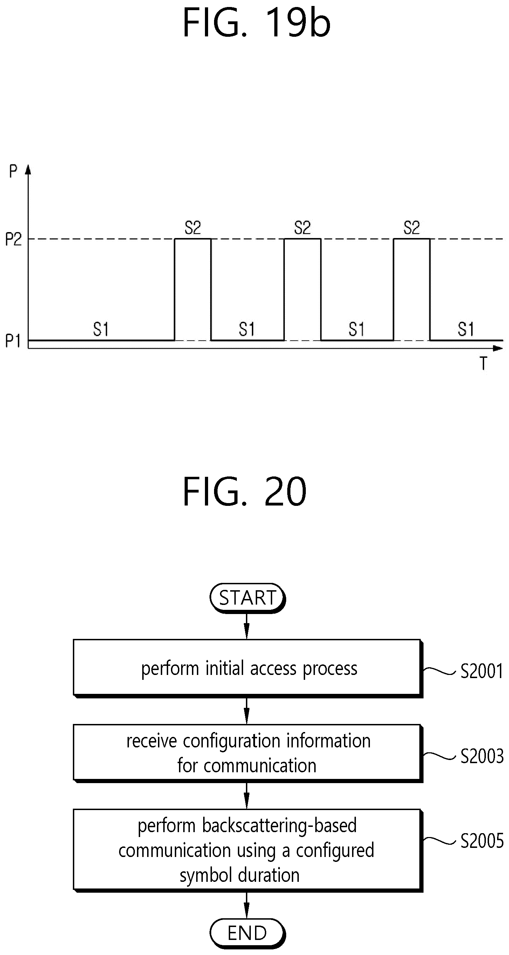

FIG. 19a and FIG. 19b illustrate examples of power consumption according to an operational state of an energy harvesting-based device applicable to the present disclosure, and a device energy state. The embodiments of FIG. 19a and FIG. 19b may be combined with various embodiments of the present disclosure.

Referring to FIG. 19b, S1 may be a sleep state, S2 may be an active state, and P1 and P2 may be power consumption values in S1 and S2, respectively. For example, the active state may refer to a state in which the device consumes power to perform operations such as reception or transmission for communication and sensing, and the sleep state may be a state other than the active state.

FIG. 19a may indicate a device energy state corresponding to FIG. 19b. Referring to FIG. 19a, an E1 value and an E2 value may be different for each device (type or class), and the device may report information related to the E1 value and/or information related to the E2 value to R and/or a base station as capability parameters. For example, the E2 value may be defined as an energy value in a fully charged state, and the E1 value may be defined as a minimum energy value required in the active state.

For example, a transition from S1 to S2 may be possible only when a device energy state value is E2 or when the device energy state value reaches E2. For example, a transition from S1 to S2 may be possible when the device energy state value is greater than E1, that is, within a range between E1 and E2. The embodiments of FIG. 19a and FIG. 19b illustrate an example in which a transition from S1 to S2 is performed when the device energy state value is E2 or when the device energy state value reaches E2.

For example, an AmIoT device may require a carrier wave (CW) provided from outside for backscattering transmission. For example, regardless of a transmission mode (e.g., backscattering transmission or internally generated transmission), the CW may be used to supply energy to AmIoT devices or may be used as a CW for downlink transmission.

For example, a CW waveform may be supported in various types. For example, a type of the CW waveform may be a CW waveform type composed of a single-tone or a relatively complex CW waveform type composed of a multi-tone. For example, since a single-tone CW uses fewer resources, it may be advantageous compared to a multi-tone CW in terms of multiplexing capacity of a tag or a reader and in terms of interference. On the other hand, for example, in the case of a multi-tone CW, when the CW is transmitted in downlink, more energy may be transferred, and advantages such as securing larger coverage from a perspective of a single device may be provided.

In consideration of advantages among different CW waveform types, a plurality of CW waveform types may be supported in an AmIoT system, and a base station/IN/AN/UE may configure a CW waveform type. For example, one or more CW waveform types supported in an AmIoT communication system may be pre-configured or pre-defined, and a base station/IN/AN/UE may select one of the one or more supported CW waveform types and transfer the selected CW waveform type to an AmIoT device. For example, a base station/IN/AN/UE may configure/indicate/display the selected CW waveform type to an AmIoT device in a form of a command or a message transmitted as a preamble/frame-synchronization signal, or as a payload.

For example, in the present disclosure, for AmIoT communication, at least one of a frame structure, synchronization and timing, random access, numerology, bandwidth, multiple access, waveform, modulation, channel coding, channel or signal aspects, scheduling and timing relationship, and/or necessary characteristics of a carrier waveform for a carrier provided from outside of an AmIoT device (including interference handling at an AmIoT device UL receiver and an NR base station, may be proposed). For example, in the present disclosure, for AmIoT communication, at least one of paging, random access, data transmission including necessary radio resource control aspects complying with limitations of a general scope, interaction with higher layers (e.g., an RRC layer, a non-access stratum (NAS) layer, an application layer, etc.), device context management, data transmission, coexistence of AmIoT with 6G, NR, or LTE, and/or RF requirements for AmIoT may be proposed.

## Specific embodiments of the present disclosure

The present disclosure relates to a technology for supporting backscatter-based ambient Internet of things (AmIoT) communication in a wireless communication system. Specifically, the present disclosure proposes various embodiments related to definition and configuration of symbol durations for communication of an AmIoT device, signal transfer techniques, etc. Hereinafter, in the present disclosure, "/" means "and", "or", or "and/or" according to context.

Recently, the Internet of things (IoT) has attracted much attention in the wireless communication world. By reducing sizes, complexity, and power consumption of IoT devices, and by deploying and connecting tens of billions to hundreds of billions of IoT devices, application to various application fields may become possible. Specifically, 3GPP SA1 is discussing use cases, scenarios, KPI, etc. for such IoT devices, and related contents may be identified in TR 22.840. In addition, 3GPP RAN is conducting studies on IoT communication through study item description (SID) objectives as described below, and outputs of the corresponding study may be identified in TR 38.848 as follows.

This study aims at a new 3GPP IoT technology suitable for deployment in 3GPP systems relying on ultra-low-power-consumption, ultra-low-complexity devices, and relies on ultra-low-power-consumption devices for ultra-low-cost IoT applications. This study should provide clear differentiation by addressing use cases and scenarios that cannot be satisfied by existing 3GPP LPWA IoT technologies (e.g., NB-IoT), such as lowering peak Tx power.

In terms of energy storage, this study will consider the following device characteristics:

· A pure batteryless device that has no energy storage capability at all and relies entirely on availability of an external energy source.
· A device having a limited energy storage capability that does not require manual replacement or charging.

Device classification according to such characteristics (e.g., an energy source, an energy storage capability, passive/active transmission, etc.) may be discussed during the study in relation to relevant use cases. Maximum power consumption of a device should be limited according to a realistic form factor suitable for a use case, and an energy source should be taken into account.

· For use cases/services agreed in "a study on ambient power-enabled Internet of things" by 3GPP SA1, appropriate deployment scenarios and their characteristics including at least the following are identified.
· Indoor/outdoor environments
· Base station characteristics (e.g., macro/micro/pico cell-based deployment)
· A connectivity topology including nodes capable of communicating with target devices such as a base station, the UE, a relay, a repeater, and the like (e.g., a connectivity topology)
· Frequency bands of TDD/FDD and licensed or unlicensed spectrum
· Coexistence with the UE and infrastructure in frequency bands for existing 3GPP technologies may be possible
· Assumptions of device-originated and/or device-terminated traffic

Note: Two or more deployment scenarios may be identified for a use case, and one deployment scenario may be commonly applicable to two or more use cases.

Note: When two or more deployment scenarios are identified for a use case, advantages and disadvantages therebetween should also be studied.

Note: In this study, deployment aspects to be coordinated with SA, such as a public or private network and whether there is CN connectivity, should not be prioritized.

Note: For a use case group having similar requirements, a representative use case may be studied.

· Based on characteristics for the identified deployment scenarios and related use cases, a set of RAN design objectives including at least the following are established.
· Power consumption
· Complexity
· Coverage
· Data rate
· Position accuracy

Note: Requirements of SA1 for related use cases should be taken into account.

Note: This study aims to provide better coverage than existing non-3GPP technologies for related use cases.

Note: Other RAN design objectives related to connection density, mobility, security, latency, reliability, and the like may be discussed when required for related use cases.

Note: Detailed definitions of the RAN design objectives should be discussed during the study.

· Based on deployment scenarios suitable for the corresponding use cases, feasibility of achieving design objectives of related use cases is compared and evaluated, and assumptions on essential functions to be supported are identified.

Note: This study does not require a detailed WG-level analysis.

Note: This study targets an IoT segment at a much lower level than existing 3GPP IoT technologies (e.g., NB-IoT, eMTC, RedCap, etc.). This study does not aim to replace existing 3GPP LPWA technologies.

According to 3GPP RAN research, three types of IoT devices are being considered, as shown in [Table 2] below.

[Table 2]

| Type | Description |
|---|---|
| Device A | No energy storage, no independent signal generation, i.e. backscattering transmission |
| Device B | Has energy storage, no independent signal generation, i.e. backscattering transmission. Use of stored energy can include amplification for reflected signals |
| Device C | Has energy storage, has independent signal generation, i.e. active RF component for transmission |

The present disclosure proposes specific signal transmission and reception schemes for a device type A or B among three types of IoT devices that communicate through backscattering transmission, but various embodiments of the present disclosure may also be applied to a Type C device.

Meanwhile, types of IoT devices may be classified as follows.

1) Type #1: having a maximum power consumption of approximately 1 uW, and performing uplink transmission by backscattering a carrier wave (CW) provided from outside (e.g., a base station or a leader such as the UE, or a separate node).

2) Type #2: having a maximum power consumption of approximately several hundred uW, and performing uplink transmission by backscattering a CW provided from outside (e.g., a base station or a leader such as the UE, or a separate node), or through a signal internally generated by itself. Type #2 may be subdivided, and a type that performs D2R transmission through backscattering may be defined as Type #2a, and a type that performs D2R transmission through an internally self-generated signal may be defined as Type #2b.

Here, backscattering transmission is a technology in which a device does not generate a wireless signal by itself and transfers information by reflecting a radiated signal present in a wireless channel. Accordingly, since power is not consumed to generate a wireless signal, ultra-low-power communication may be enabled. An AmIoT device reflects a signal toward a reader, and information may be represented by turning on/off a reflection operation or changing a phase of a reflected signal.

For backscattering transmission, a carrier wave (CW) is required. An AmIoT device supporting backscattering-based transmission may transmit information by modulating and backscattering an externally provided CW. An AmIoT device supporting transmission based on independent signal generation may transmit information by modulating an internally generated CW. In general, a CW is interpreted as an externally provided CW for backscattering. A CW may also be used as an energizing signal (ES) for RF energy transfer.

Meanwhile, in order for communication systems such as 4G, 5G, and 6G to support AmIoT, determination of data encoding and modulation schemes is required by considering requirements, device types, spectrum deployment scenarios, connectivity topologies, design targets, functions, etc. that are different from those of conventional ultra high frequency (UHF) passive radio frequency identification (RFID). In addition, an issue of efficient coexistence with a communication system should also be importantly considered.

According to 3GPP RAN research, at least four topologies are being considered, as shown in [Table 3].

[Table 3]

| Topology | Contents | Note |
|---|---|---|
| Topology #1 | Base station ↔ Ambient IoT device | includes the possibility of base station reception and base station transmission within different base stations |
| Topology #2 | Base station ↔ Intermediate node ↔ Ambient IoT device | Intermediate nodes may be relays, IABs, UEs, repeaters, etc., and have ambient IoT capabilities. |
| Topology #3 | Base station ↔ Assisting node ↔ Intermediate node ↔ Ambient IoT device | Assisting node may be relays, IABs, UEs, repeaters, etc., and have ambient IoT capabilities. |
| Topology #4 | UE ↔ Ambient IoT device | |

In the case of topology #1 or topology #2 among four topologies exemplified in [Table 3], the present disclosure proposes signal transmission and reception technologies applicable to performing direct communication (e.g., mono-static communication) between a base station or an intermediate node and an IoT device. However, various embodiments described below may also be applied to topology #3 or topology #4.

With respect to deployment scenario #1 using topology #1 (e.g., an indoor base station + an indoor AmIoT device), cases are considered in which an external CW is present within the topology, an external CW is present outside the topology, and an external CW is absent (e.g., a case of performing D2R (device to reader) transmission using an internally generated CW). In addition, with respect to deployment scenario #2 using topology #2 (e.g., an outdoor base station + an indoor intermediate UE + an indoor AmIoT device), cases are considered in which an external CW is present within the topology, an external CW is present outside the topology, and an external CW is absent (a case of performing D2R transmission using an internally generated CW).

For R2D (reader to device)/D2R communication, low-power/low-complexity modulation schemes such as ASK (e.g., OOK), PSK (e.g., BPSK), and FSK (e.g., B-FSK) may be considered. In addition, for efficient control of R2D/D2R communication, a system may define a chip as a basic unit of modulation, and based on the chip, may align start points and/or end points between transmission units (e.g., OFDM symbols) of a coexisting communication system and AmIoT transmission symbols, or may indicate/control parameters for R2D/D2R communication (e.g., an R2D/D2R data/chip rate, a frequency shift (FS) value).

A chip, which is a basic unit of modulation, may be defined as a unit of a bit sequence or a phase sequence at an output end of a channel/baseband/data encoder. For example, when Manchester encoding (ME) (e.g., a scheme in which data-0 is mapped to {+phase, -phase} or {1, 0} and data-1 is mapped to {-phase, +phase} or {0, 1}, or conversely a scheme in which data-0 is mapped to {-phase, +phase} or {0, 1} and data-1 is mapped to {+phase, -phase} or {1, 0}) is applied, a 2-chip ME codeword composed of {1, 0} may be generated.

Based on the definition descried above of a chip, for channel/baseband/data encoding schemes considered in AmIoT communication, a codeword duration may be defined. In the case of an ME codeword, the codeword duration may be understood as 2-chips. In the case of extended/repeated ME (e.g., e-ME/r-ME), the codeword duration may be defined as 4-chips, 8-chips, or the like according to a degree of extension/repetition. For example, when the codeword duration is 4-chips, e-ME/r-ME may map data-0 to {1, 1, 0, 0} or {1, 0, 1, 0}, respectively.

In the case of pulse-interval encoding (PIE), a pulse width (PW) of a low interval of a signal is configured to be the same regardless of data-0 and data-1, and data-0 and data-1 are identified by a difference in a high interval. A reader (R) may select/determine lengths of data-0 and data-1 within a predetermined range, and the R may indicate information related to the selection/determination to a tag (T) through an R=>T preamble or a frame sync. In order to support such a scheme in topology #2 for AmIoT communication, a base station may configure/indicate information related to a length of data-0 and a length of data-1 to an intermediate node (e.g., the UE). Alternatively, the base station may configure/indicate information related to a length of data-0, a length of data-1, and a difference between the length of data-0 and the length of data-1. The intermediate node (e.g., the UE) may perform an R2D transmission and/or a D2R reception operation by using the configured or indicated information.

When PIE is applied to AmIoT, a chip may be defined based on a length of a low interval, or may be defined based on a codeword duration. Based on the chip unit described above, a codeword, an encoded symbol duration, a data rate, an FS value, and the like may be controlled, and related control information may be transferred or indicated through a preamble, a midamble, a postamble, a synchronization signal, and/or a payload. A reader or an AmIoT device may transfer or indicate information related to configuration of a chip. Alternatively, in the case of topology #2 for AmIoT communication, a base station may configure/indicate information related to configuration of a chip to an intermediate node (e.g., the UE). The intermediate node (e.g., the UE) may perform an R2D transmission and/or a D2R reception operation according to the configured or indicated scheme.

**[Embodiment #1] Configuration/definition symbol duration for communication of AmIoT UE**

Considering a numerology of an NR system and a target data rate of an AmIoT system, a symbol duration for communication of an AmIoT UE (hereinafter referred to as 'AmIoT communication') may be determined based on one or more of the following schemes. Here, a symbol duration means a minimum unit of a resource for transferring a signal transmitted for AmIoT communication. Similar to that a minimum unit on a time axis in an NR system is an OFDM symbol, a minimum unit on a time axis for transferring a signal (e.g., a CW) for AmIoT communication may be defined. Therefore, a symbol duration may be referred to by another term as long as a technical meaning is conveyed, and for example, may be referred to as a signal unit, a resource unit, a symbol unit, a chip, or another term having an equivalent technical meaning. In the present disclosure, an NR system may be replaced with a wireless communication system such as a 5G system or a 6G system, or a mother system, or a coexisting communication system. In addition, in the present disclosure, an OFDM symbol or a CP-OFDM symbol may be replaced with a basic transmission time unit of the corresponding 5G and/or 6G wireless communication system, the mother system, or the coexisting communication system.

FIG. 20 illustrates an example of a procedure for performing backscattering-based communication according to an embodiment of the present disclosure. FIG. 20 exemplifies a method performed by a UE (e.g., an AmIoT UE).

Referring to FIG. 20, in step S2201, the UE performs initial access. That is, the UE may perform a random access procedure. Specifically, the UE may detect at least one synchronization signal transmitted from a base station and may receive system information. Then, the UE may transmit a random access preamble signal based on the at least one synchronization signal and the system information, may receive a random access response message, and may perform signaling for establishing a connection.

In step S2203, the UE receives configuration information for communication. Here, the configuration information may include various parameters related to communication. For example, the configuration information may include information related to backscattering-based communication. According to various embodiments, the configuration information may include information related to a symbol duration for backscattering-based communication. Specifically, the information related to the symbol duration may indicate a size of the symbol duration, and the size may be indicated based on another signal unit or may be indicated as a time value.

In step S2205, the UE performs backscattering-based communication by using the configured symbol duration. Here, the configured symbol duration may be identified based on the configuration information received in step S2203. According to another embodiment, when the symbol duration is not configured through signaling and is predefined or is configured based on a predefined rule, the UE may identify configuration of the predefined symbol duration or may determine configuration of the symbol duration according to the predefined rule. Then, the UE may perform communication by reflecting a CW transmitted by a base station or another device.

Corresponding to operations of a UE as illustrated in FIG. 20, a base station may transmit configuration information, may transmit a CW based on configuration of a symbol duration, and may receive a reflected signal. However, when another device operates as a reader, the other device may receive the reflected signal.

According to an embodiment described with reference to FIG. 20, a UE (e.g., an AmIoT UE) may determine a symbol duration of a signal for backscattering-based communication, and may perform backscattering-based communication based on the determined symbol duration. In this case, detailed configuration of the symbol duration may be variously defined. For example, configurations in schemes such as those shown in [Table 4] below may be possible.

[Table 4]

| Scheme | Contents |
|---|---|
| Scheme #1 | N CP-OFDM symbols of an NR system may be defined as one symbol duration for AmIoT communication, and the N value may be predefined or may be configured or indicated to the AmIoT UE. |

(continued)

| Scheme | Contents |
|---|---|
| Scheme #2 | By dividing one CP-OFDM symbol duration of an NR system into M equal parts, M sub-durations may be formed, and one of the M sub-durations may be defined as a symbol duration for AmIoT communication. The M value may be predefined or may be configured or indicated to the AmIoT UE. In this case, one CP-OFDM symbol duration may include a CP duration, may not include the CP duration, or may include only a part of the CP duration. |
| Scheme #3 | One or more OFDM samples (e.g., T_c or T_s defined in TS 38.211) may be defined as a sample group, and K sample groups may be defined as one symbol duration for AmIoT communication. The K value and a rule for determining the sample group may be predefined or may be configured or indicated to the AmIoT UE. |

One of schemes exemplified in [Table 4] may be differently configured/applied or may be commonly configured/applied according to at least one of the following elements.

- A use case of the AmIoT UE (e.g., inventory, sensor, positioning, command, etc.)
- A device type of the AmIoT UE
- A topology of AmIoT communication
- A tag ID of the AmIoT UE
- A maximum capacity that the AmIoT UE may store energy
- A current amount of energy stored in the AmIoT UE or a ratio of the stored energy amount relative to the maximum capacity that may be stored

According to an embodiment, a base station may determine configuration of a symbol duration (e.g., a symbol length, a start position, a valid duration, a periodicity, etc.) based on at least one of a use case of an AmIoT UE, a device type of the AmIoT UE, a topology of AmIoT communication, a tag ID of the AmIoT UE, a maximum energy storage capacity of the AmIoT UE, a current amount of energy stored in the AmIoT UE, and a ratio of the stored energy amount relative to the maximum storage capacity of the AmIoT UE, and may transmit information related to the determined configuration to the AmIoT UE. According to another embodiment, when configuration of the symbol duration is determined based on a predefined rule without signaling, each of the base station and the AmIoT UE may determine configuration of the symbol duration based on at least one of the items described above.

**[Embodiment #2] Configuration of symbol duration for AmIoT UE communication**

For communication of AmIoT UEs corresponding to device type A or device type B, both an energy transfer signal (ETS) for an energy harvesting purpose and a backscattering signal (BSS) used for backscattering communication after reception of the ETS by the AmIoT UEs may be required.

In order for a BSS transmitted from a base station, an intermediate node, or a separate UE device to be efficiently received at a destination after being backscattered by an AmIoT UE, the BSS may be advantageously configured as a CW. However, an NR system generates a final OFDM symbol by adding a CP to a front end of a net OFDM symbol in order to be robust to intersymbol interference (ISI) after generating one OFDM symbol. Due to such characteristics, it may be difficult to configure a CW that maintains the same frequency component across a plurality of OFDM symbols.

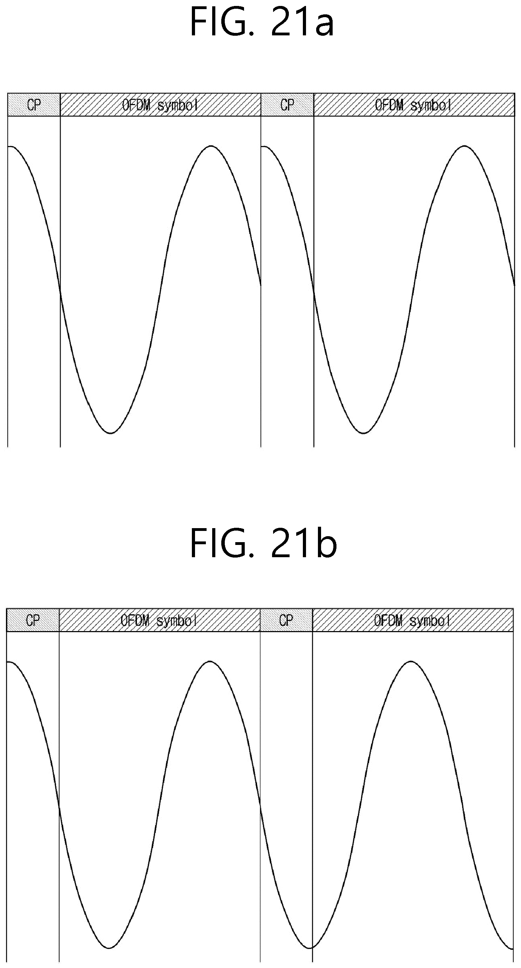

FIG. 21a and FIG. 21b illustrate examples of phase structures of an OFDM symbol including a CP. Referring to FIG. 21a, when a CP is added to a front end of a net OFDM symbol, a frequency component of a CW may not be maintained. To overcome this, as shown in FIG. 21b, when a phase is adjusted for each OFDM symbol, even if a CP is added to a front end of each OFDM symbol, a waveform may be configured to satisfy a CW condition across a plurality of OFDM symbols.

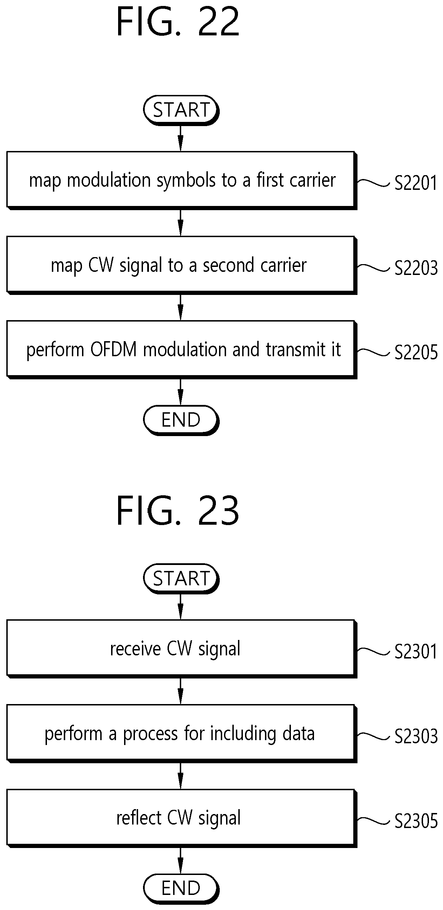

FIG. 22 illustrates an example of a procedure for transmitting a CW signal according to an embodiment of the present disclosure. FIG. 22 exemplifies a method performed by a device transmitting a CW (e.g., a base station, an intermediate node, a UE, etc.). FIG. 22 shows an example of a procedure for generating and transmitting one OFDM symbol, and for transmission of consecutive OFDM symbols, the procedure of FIG. 22 may be repeatedly performed.

Referring to FIG. 22, in step S2201, a base station maps modulation symbols to a first subcarrier set. Here, the modulation symbols include data transmitted to a general UE other than an AmIoT UE, and are generated according to a modulation scheme determined based on channel quality. That is, the base station generates modulation symbols by modulating data, and maps the modulation symbols to subcarriers allocated for transmission of the modulation symbols.

In step S2203, the base station maps a CW signal to a second subcarrier set. The CW signal may be a sinusoidal wave of a specific frequency. Since the CW signal occupies a specific frequency band of an OFDM symbol, a value corresponding to the CW signal may be mapped to the corresponding subcarriers. In this case, when a symbol duration of the CW includes consecutive OFDM symbols on a time axis, the base station may adjust a phase of the CW signal such that phase continuity of the CW is maintained after CP insertion. Specifically, when the symbol duration is configured to include a plurality of OFDM symbols including a first OFDM symbol and a second OFDM symbol, the CW signal mapped to the second OFDM symbol may be phase-adjusted to match a start phase value of a portion extracted as a CP and a phase value at a end of the first OFDM symbol.

In step S2205, the base station performs OFDM modulation and transmits an OFDM symbol. That is, the base station may generate a net OFDM symbol by performing a IFFT operation, may generate an OFDM symbol by inserting a CP, and may transmit the generated OFDM symbol. In this case, despite CP insertion, the CW signal may maintain the same frequency component by phase adjustment.

As described in the above embodiment, it is possible to maintain the same frequency component of a CW through CP-by-CP phase adjustment. According to another embodiment, as an alternative to the CP-by-CP phase adjustment scheme, introduction of $\pi/2$-binary phase-shift keying (BPSK) modulation may be considered. However, even when the $\pi/2$-BPSK modulation is introduced, in a worst case, a problem may occur in which a phase exceeds $\pi/2$ or $\pi/4$ due to a CP inserted in between. Therefore, in order to resolve this, it may be considered to introduce the $\pi/2$-BPSK modulation while additionally applying CP-by-CP phase adjustment. Since the $\pi/2$-BPSK modulation and the CP-by-CP phase adjustment scheme have significance in a situation in which data is modulated for each symbol, they may be applied only to a BSS other than an ETS.

In addition, when the corresponding CW transmission scheme is applied, a unit/period in which the CW is maintained may be configured or indicated to the AmIoT UE by a base station. As in the example of FIG. 21b, when the CW is maintained for every two OFDM symbols, interval information of the two OFDM symbols and/or a start point of the interval (e.g., SFN#0 or every subframe) may be configured/defined/indicated. The interval information may be defined in an OFDM symbol unit, a slot unit, a subframe unit, or an absolute time unit (e.g., X msec, Y usec). For example, when information of one slot is configured or indicated, the AmIoT UE may assume that the CW is maintained for a plurality of OFDM symbols within at least the same slot.

According to another embodiment, similar to an NR PRACH signal, a signal for an AmIoT UE may be generated by using a scheme of repeating OFDM symbols without a CP. In this case, a base station may abandon FDM with NR signals, or may sufficiently secure a guard band on a frequency axis and perform FDM with existing NR signals.

Since a CW property may not be maintained due to CP insertion, it may be considered to utilize the corresponding CP duration for a separate purpose. As an example, during a CP duration or during a symbol duration for AmIoT UE communication including the CP duration or a part thereof, a base station may transmit a known sequence rather than data, and when AmIoT UEs receive the known sequence, the CP duration, etc. may be utilized for time and/or frequency-axis synchronization. However, since utilizing a CP duration or a symbol duration for AmIoT UE communication including the CP duration or a part thereof for another purpose may not be applied for every OFDM symbol, information related to a specific time interval may be configured or indicated. The information related to the corresponding interval may be defined in an OFDM symbol unit, a slot unit, a subframe unit, or an absolute time unit (e.g., X msec, Y usec). As an example, when information of one slot is configured, an AmIoT UE may recognize that a known sequence is transmitted once per one slot during a CP duration or during a symbol duration for AmIoT UE communication including the CP duration or a part thereof.

As described above, a scheme of maintaining a CW across a plurality of OFDM symbols may be applied to scheme #1 among schemes proposed in embodiment #1, that is, a case in which N CP-OFDM symbol durations are defined as one symbol duration for AmIoT communication.

The CW transmission scheme described above may be commonly applied to both an ETS and a BSS without distinction. Alternatively, in order to utilize that energy transfer efficiency increases as a PAPR is higher, the CW transmission scheme described above may not be applied to the ETS and may be applied only to the BSS.

**[Embodiment #3] Processing of a backscattering signal considering a diversity effect and/or inter-cell interference randomization.**

FIG. 23 illustrates an example of a procedure for transmitting data by using backscattering-based communication according to an embodiment of the present disclosure. FIG. 23 exemplifies a method performed by a UE (e.g., an AmIoT UE).

Referring to FIG. 23, in step S2301, the UE receives a CW signal. The CW signal is transmitted from a base station or another device, and may include a BSS for backscattering-based communication. At this time, although not illustrated in FIG. 23, before receiving the CW signal, the UE may perform a random access procedure for initial access to the base station, and may receive system information, configuration information, and/or control information required for communication. At this time, during the random access procedure, an uplink signal (e.g., a random access preamble, msg3, msgA, etc.) may be transmitted by reflecting the CW signal based on backscattering.

In step S2303, the UE performs processing for including data. Before reflecting the CW signal, the UE may perform processing for loading data onto the CW signal, that is, processing for representing data by using the CW signal. For example, the UE may change a phase of the CW signal, or may change another property of the CW signal. At this time, the UE may process the signal based on configuration information and/or control information related to reflection of the CW signal.

In step S2305, the UE reflects the CW signal. Through this, the UE may transfer data to a reader (e.g., a base station, an intermediate node, a UE, etc.). Although the processing operation in step S2303 and the reflection operation in step S2305 have been described as separate steps, according to an implementation of the UE, the signal processing operation and the reflection operation may be understood as one operation.

As in the embodiment described with reference to FIG. 23, a UE, for example, an AmIoT UE, may perform backscattering-based communication by changing a property of a CW signal. At this time, when a received CW signal and a reflected CW signal are processed differently on a frequency axis or a time axis, a diversity effect and an interference mitigation effect may occur. Accordingly, the present disclosure describes embodiments related to frequency modulation and time modulation of a backscattering signal.

**[Embodiment #3-1] Frequency modulation of backscattering signal considering frequency diversity and/or inter-cell interference randomization.**

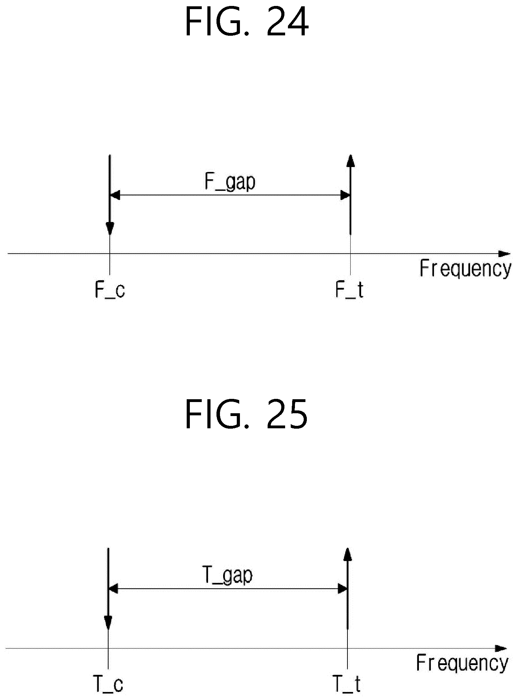

According to the present Embodiment #3-1, as shown in FIG. 24, an AmIoT UE receiving a CW of a frequency $F\_c$ (e.g., a BSS) transmitted from a base station, an intermediate node, or a separate UE device may modulate a frequency by applying a frequency gap $F\_gap$, and may transmit a backscattered signal/data to the base station, the intermediate node, or the separate UE device through a transmission frequency $F\_t$.

From a reception perspective of one AmIoT UE, it may be beneficial to increase the efficiency of IoT communications by reducing interference when signals are received from a plurality of base stations, intermediate nodes, or separate UE devices that may be present in surroundings. Similarly, from a reception perspective of a base station, an intermediate node, or a separate UE device, when signals are received from a plurality of AmIoT UEs, it may be beneficial to increase efficiency of IoT communication by reducing interference. In addition, since communication efficiency may be significantly degraded due to occurrence of fading for a specific frequency (e.g., $F\_c$ or $F\_t$) in a wireless channel environment, pursuing a frequency diversity effect in order to overcome this may help to maximize efficiency of IoT communication. Considering such advantages, the present disclosure proposes various embodiments for determining $F\_c$ and/or $F\_t$.

From a reception perspective of one AmIoT UE, considering an effect of reducing interference when signals are received from a plurality of base stations, intermediate nodes, or separate UE devices, a location of $F\_c$ may be determined based on all or part of the following elements.

- A (physical) cell index
- A subframe index
- A slot index
- A CP-OFDM symbol index of an NR system
- A symbol index for AmIoT UE communication
- An AmIoT device type

According to an embodiment, a base station may determine $F\_c$ based on at least one of a cell index, a subframe index in which a CW signal is transmitted, a slot index in which the CW signal is transmitted, a symbol index corresponding to the CW signal, a symbol index for AmIoT communication, and a type of an AmIoT device.

Similarly, from a reception perspective of a base station, an intermediate node, or a separate UE device, considering an effect of reducing interference when signals are received from a plurality of AmIoT UEs, a relative location of $F\_t$ from $F\_c$ or a size of $F\_gap$ may be determined based on all or part of the following elements.

- An AmIoT device index
- A subframe index
- A slot index
- A CP-OFDM symbol index of an NR system
- A symbol index for AmIoT UE communication
- An AmIoT device type
- A capability for a maximum $F\_gap$ size of AmIoT
- A maximum capacity that an AmIoT UE may store energy
- A current amount of energy stored in an AmIoT UE or a ratio of the stored energy amount relative to the maximum capacity that may be stored

According to an embodiment, an AmIoT UE may determine a frequency gap F_gap based on at least one of an AmIoT device index, a subframe index in which a CW signal is received, a slot index in which the CW signal is received, a symbol index corresponding to the CW signal, a symbol index for AmIoT communication, a type of an AmIoT device, a capability for a maximum frequency gap size of the AmIoT UE, a current amount of energy stored in the AmIoT UE, and a ratio of the stored energy amount relative to a maximum storage capacity of the AmIoT UE. Alternatively, according to another embodiment, a base station may determine the frequency gap F_gap based on the items described above, and may configure/indicate a transmission frequency F_t or the frequency gap F_gap to the AmIoT UE.

As a specific example of variable F_t operation based on an AmIoT device type, for a UE of device type A, a value of F_t or a size of F_gap within a maximum X may be configured/indicated, whereas for a UE of device type B, a value of F_t or a size of F_gap within a maximum Y (> X), or within a range of at most Y and at least/greater than X, may be configured/indicated. That is, F_t or F_gap may be determined within a range not exceeding an upper bound determined based on an AmIoT device type. Here, values X and Y may be separately preconfigured or may be defined in a specification document.

Meanwhile, considering a frequency diversity effect, even for a signal from one base station, an intermediate node, or a separate UE device, CWs to which at least one F_c value is applied at one time point may be transmitted as a BSS and/or an ETS. For example, a plurality of CWs may be transmitted during one interval by using different frequencies.

Alternatively, considering both a frequency diversity effect and an interference randomization effect, a frequency hopping technique may be applied to a location of F_c and/or a relative location of F_t from F_c or a size of F_gap. Individual hopping offsets of F_hop1 and F_hop2 may be applied, and a change periodicity and a magnitude between two offset values may be differently configured or applied. That is, F_c, F_t, and/or F_gap may be determined based on at least one offset value that is periodically changed.

For example, based on F_c(t+1)=F_c(t)+F_hop1+F_hop2, an F_c value at time {t+1} may be determined from an F_c value at a t-th time. Here, a value of time t may be determined based on a combination of a subframe index, a slot index, a symbol index, etc. A periodicity at which F_hop1 and F_hop2 are changed and a range of magnitudes of changed values may be separately configured, and according to an embodiment, a periodicity and a magnitude of one of the offsets (e.g., F_hop2) may be configured to be always larger than those of the other offset (e.g., F_hop1). In addition, depending on whether a corresponding signal is an ETS or a BSS, the same hopping rule may be applied, or a different hopping rule may be applied (e.g., both F_hop1 and F_hop2 are applied to a BSS, whereas only one offset, for example, only F_hop2, is applied to an ETS and the other offset value is not applied).

As described above, locations/sizes of F_c, F_gap, F_t, F_hop1, and F_hop2 may be defined to have a multiple relationship with a sub-carrier spacing (SCS) defined in an NR system by considering a numerology of NR. As an example, a location of F_c may be configured by reusing an NR absolute radio frequency channel number (NR-ARFCN). Sizes of F_gap, F_hop1, and F_hop2 may be determined as multiples of a specific SCS (e.g., a separately configured SCS, an SCS configured in an active/initial/default BWP, a largest/smallest SCS among a plurality of SCSs configured for a related carrier), or may be determined as multiples of one RB (e.g., 12 subcarriers) based on the corresponding SCS.

**[Embodiment #3-2] Time-axis modulation of a backscattering signal considering time diversity and/or inter-cell interference randomization**

As shown in the example of FIG. 25, an AmIoT UE receiving a signal (i.e., a BSS signal) from a base station, an intermediate node, or a separate UE device at a time T_c may perform delayed transmission after a time interval T_gap is applied. Accordingly, at a transmission time T_t, a backscattered signal/data may be transmitted to the base station, the intermediate node, or the separate UE device.

From a reception perspective of one AmIoT UE, when signals are received from a plurality of base stations, intermediate nodes, or separate UE devices that may exist in surroundings, it may be beneficial to increase efficiency of IoT communication by reducing interference. Similarly, from a reception perspective of a base station, an intermediate node, or a separate UE device, when signals are received from a plurality of AmIoT UEs, it may be beneficial to increase efficiency of IoT communication by reducing interference. In addition, in a wireless channel environment, similar to the embodiment #3-1 described above, pursuing a time diversity effect may help to maximize efficiency of IoT communication. Considering such advantages, the present disclosure proposes various embodiments for determining T_c and/or T_t.

From a reception perspective of one AmIoT UE, considering an effect of reducing interference when signals are received from a plurality of base stations, intermediate nodes, or separate UE devices, a location of T_c may be determined based on all or part of the following elements.

- A (physical) cell index
- A subframe index

- A slot index
- A CP-OFDM symbol index of an NR system
- A symbol index for AmIoT UE communication
- An AmIoT device type

According to an embodiment, a base station may determine $T_c$ based on at least one of a cell index, a subframe index in which a CW signal is transmitted, a slot index in which the CW signal is transmitted, a symbol index corresponding to the CW signal, a symbol index for AmIoT communication, and a type of an AmIoT device.

Similarly, from a reception perspective of a base station, an intermediate node, or a separate UE device, considering an effect of reducing interference when signals are received from a plurality of AmIoT UEs, a relative location of $T_t$ from $T_c$ or a size of $T\_gap$ may be determined based on all or part of the following elements.

- An AmIoT device index
- A subframe index
- A slot index
- A CP-OFDM symbol index of an NR system
- A symbol index for AmIoT UE communication
- An AmIoT device type
- A capability for a maximum $F\_gap$ size of AmIoT
- A maximum capacity that an AmIoT UE may store energy
- A current amount of energy stored in an AmIoT UE or a ratio of the stored energy amount relative to the maximum capacity that may be stored

According to an embodiment, an AmIoT UE may determine a time interval $T\_gap$ based on at least one of an AmIoT device index, a subframe index in which a CW signal is received, a slot index in which the CW signal is received, a symbol index corresponding to the CW signal, a symbol index for AmIoT communication, a type of an AmIoT device, a capability of the AmIoT UE for a maximum time gap size, a current amount of energy stored in the AmIoT UE, and a ratio of the stored energy amount relative to a maximum storage capacity of the AmIoT UE. Alternatively, according to another embodiment, a base station may determine the time interval $T\_gap$ based on the items described above, and may configure/indicate a transmission time $T_t$ or the time interval $T\_gap$ to the AmIoT UE.

As a specific example of variable $T_t$ operation based on an AmIoT device type, for a UE of device type A, a value of $T_t$ or a size of $T\_gap$ within a maximum X may be configured or indicated, whereas for a UE of device type B, a value of $T_t$ or a size of $T\_gap$ within a maximum Y (> X), or within a range of at most Y and at least/greater than X, may be configured/indicated. Here, values X and Y may be separately predefined or may be defined in a specification document.

Meanwhile, considering a time diversity effect, even for a signal from one base station, an intermediate node, or a separate UE device, CWs to which at least one $T_c$ value is applied at one time point may be transmitted as a BSS and/or an ETS. In addition, for backscattered data transmission of an AmIoT UE, a location of $T_t$ or a size of $T\_gap$ corresponding to one $T_c$ may be defined as at least one value. In this case, for the same signal or modulated data, the AmIoT UE may transmit backscattered data at a plurality of $T_t$ locations.

Alternatively, considering both a time diversity effect and an interference randomization effect, different values over time may be applied to a location of $T\_gap$ and/or a relative location of $T_t$ from $T\_gap$ or a size of $T\_gap$. As an example, based on $T\_gap(t+1)=T\_gap(t)+T\_hop$, a $T\_gap$ value at time {t+1} may be determined from a $T\_gap$ value at a t-th time. Here, a value of time t may be determined based on a combination of a subframe index, a slot index, a symbol index, etc. A periodicity at which $T\_hop$ is changed and a range of magnitudes of changed values may be separately configured, or may be defined as values randomly changed within a predetermined range. Alternatively, a $T\_gap(t+1)$ value at a specific time {t+1} may be defined as a value randomly changed within a predetermined range regardless of $T\_gap(t)$ at a previous time t. Since power consumption of an AmIoT UE may increase as $T\_gap$ increases, random change of the $T\_gap$ value may be beneficial in terms of fairness. In addition, depending on whether a corresponding signal is an ETS or a BSS, the same rule may be applied, or a different rule may be applied (e.g., a $T\_hop$ change periodicity/value applied to a BSS and a $T\_hop$ change periodicity/value applied to an ETS may be different from each other).

In the embodiments described above, a timing/size of $T_c$, $T\_gap$, $T_t$, and $T\_hop$ may be defined to have a multiple relationship with one or more OFDM samples (e.g., $T_c$ or $T_s$ defined in TS 38.211) defined in an NR system by considering a numerology of NR.

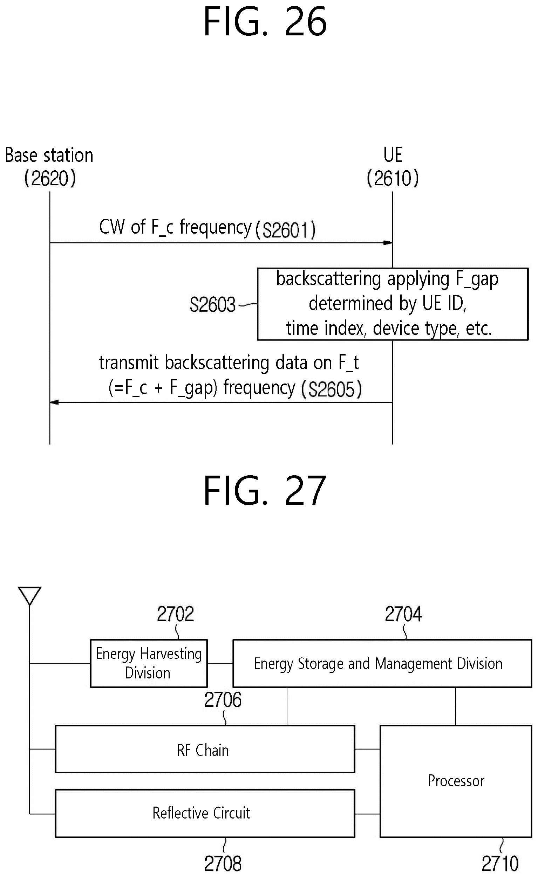

FIG. 26 illustrates an example of a procedure for performing backscattering-based communication using frequency modulation according to an embodiment of the present disclosure. FIG. 26 exemplifies signal exchange between a UE 2610 and a base station 2620.

Referring to FIG. 26, in step S2601, the base station 2620 transmits a CW signal (e.g., a BSS) of a frequency $F_c$ to the UE 2610. In step S2603, the UE 2610 modulates a frequency of the CW signal by applying $F\_gap$. Here, $F\_gap$ may be determined based on a current state or information related to the UE 2610, such as a UE ID, a time index, or a device type. That is, considering frequency diversity and/or interference randomization effects, as in the embodiment #3-1 described above, the UE 2610 may adjust F_c and/or F_gap based on a cell/UE ID, a time index (e.g., a subframe, a slot, or a symbol), a device type, etc. In step S2605, the UE 2610 transmits backscattered signal/data to the base station 2620 through a frequency F_t.

FIG. 27 illustrates an example of a structure of an AmIoT device according to an embodiment of the present disclosure.

Referring to FIG. 27, the AmIoT device includes an energy harvesting unit 2702, an energy storage and management unit 2704, an RF chain 2706, a reflection circuit 2708, and a processor 2710.

The energy harvesting unit 2702 obtains energy for power supply from a signal (e.g., an ETS) received through an antenna. For example, the energy harvesting unit 2702 may include a rectifier, and may convert an alternating current (AC) signal into a direct current (DC) signal by using the rectifier. In addition, according to another embodiment, the energy harvesting unit 2702 may obtain energy by additionally using at least one of solar, vibration, movement, and a temperature difference in addition to an RF signal.

The energy storage and management unit 2704 stores energy obtained by the energy harvesting unit 2702. The energy storage and management unit 2704 may include at least one capacitor, and may be implemented in a structure similar to a rechargeable battery. In addition, the energy storage and management unit 2704 supplies power to other components by using the stored energy. That is, the energy storage and management unit 2704 performs a function of a power management unit (PMU).

The RF chain 2706 is a circuit for receiving and processing an RF signal. The RF chain 2706 processes a signal transmitted from a base station, etc. to an AmIoT device. For example, the RF chain 2706 may include at least one of a filter (e.g., a band pass filter (BPF), a low pass filter (LPF), etc.), an envelope detector, a mixer, an oscillator, a comparator, and an analog to digital converter (ADC).

The reflection circuit 2708 is a circuit for a backscattering operation. The reflection circuit 2708 transmits a transmission signal generated by reflecting a received signal (e.g., a CW) through an antenna. For example, the reflection circuit 2708 may include at least one of a backscatter modulator that modulates a backscattered signal by switching an impedance of the transmission signal, a frequency shifter that converts a frequency of the transmission signal, and a reflection amplifier that amplifies the transmission signal. However, depending on a type of an AmIoT device, the reflection circuit 2708 may be omitted and replaced with an RF chain for processing a transmission signal. Alternatively, depending on a type of an AmIoT device, in addition to the reflection circuit 2708, an RF chain for processing a transmission signal may be further included.

The processor 2710 controls overall operations of the AmIoT device and controls other components. The processor 2710 may include a baseband circuit including a decoder, a controller, and an encoder. The processor 2710 may interpret and process information included in a received signal. The processor 2710 may provide a signal for a backscattering operation.

In a situation in which communication among a plurality of base stations and a plurality of AmIoT UEs is mixed, by performing backscattering-based communication while changing time/frequency components through various elements such as a cell/UE ID, a time index (e.g., a subframe, a slot, a symbol, etc.), and a device type, frequency/time diversity and/or interference randomization effects may occur. Accordingly, as a result, communication efficiency may be increased.

The proposed methods described above may be implemented independently, but may also be implemented in a form of combination (or merging) of some proposed methods. Information on whether the proposed methods are applied (or information on rules of the proposed methods) may be defined by a rule such that the base station informs the UE through a predefined signal (e.g., a physical layer signal or a higher layer signal).

The present disclosure may be embodied in other specific forms without departing from the technical idea and essential features described herein. Therefore, the above detailed description should not be interpreted in a limiting sense in all aspects and should be considered as illustrative. The scope of the present disclosure should be determined by a reasonable interpretation of the appended claims, and all modifications within the equivalent scope of the present disclosure are included in the scope of the present disclosure. In addition, claims having no explicit reference relationship in the claims may be combined to constitute an embodiment, or may be included as new claims through amendment after filing.

**INDUSTRIAL APPLICABILITY**

The embodiments of the present disclosure may be applied to various wireless access systems. Examples of various wireless access systems include 3rd Generation Partnership Project (3GPP) systems or 3GPP2 systems.

The embodiments of the present disclosure may be applied not only to the above various wireless access systems but also to all technical fields to which the above various wireless access systems are applied. Furthermore, the proposed method may be applied to mmWave and THz communication systems using an ultra-high frequency band.

Additionally, the embodiments of the present disclosure may be applied to various applications such as autonomous vehicles and drones.

**Claims**

1. A method performed by a user equipment (UE) in a wireless communication system, the method comprising:

    receiving at least one synchronization signal;
    receiving system information;
    performing a random access process for accessing a base station based on the synchronization signal and the system information; and
    transmitting a backscattered signal by reflecting a carrier wave (CW) signal transmitted from the base station,
    wherein the CW signal and the backscattered signal is transmitted from different frequencies.

2. The method of claim 1, the step of transmitting the backscattered signal comprising:
modulating a frequency of the CW signal.

3. The method of claim 2, further comprising:
determining a transmission frequency for transmitting a frequency gap for the modulation of the frequency or the backscattered signal.

4. The method of claim 3,
wherein the frequency gap or the transmission frequency is determined based on at least one of an ambient Internet of Things (AmIoT) device index included in the UE, a subframe index in which the CW signal is received, a slot index in which the CW signal is received, a symbol index corresponding to the CW signal, a symbol index for an AmIoT communication, a type of an AmIoT device, or a capability for a maximum frequency gap size of the UE.

5. The method of claim 4,
wherein the frequency gap or the transmission frequency is determined within a range less than or equal to an upper limit value determined based on the type of the AmIoT device.

6. The method of claim 2,
wherein the frequency gap or the transmission frequency is determined based on at least one offset value that changes periodically.

7. The method of claim 6, further comprising:
receiving information related to the at least one offset value.

8. The method of claim 6,
wherein the at least one offset value is configured differently when the CW signal is an energy transfer signal (ETS) and a backscattering signal (BSS).

9. The method of claim 6,
wherein the at least one off set value is determined to have a multiple relationship with sub-carrier spacing (SCS).

10. The method of claim 1, the step of the performing the random access process comprising:
transmitting at least one uplink signal for the random access process by reflecting the CW signal transmitted from the base station.

11. The method of claim 1,

    wherein the CW signal is received through a symbol duration for an AmIoT communication, and
    wherein the symbol duration includes a duration determined by equally dividing a cyclic prefix (CP)-orthogonal frequency division multiplexing (OFDM) symbol or a CP-less OFDM symbol.

12. The method of claim 11,

wherein, when the symbol duration is configured to include a plurality of OFDM symbols including a first OFDM symbol and a second OFDM symbol, a CW signal mapped to the second OFDM signal is phase-adjusted to match a starting phase value of a part extracted as a CP and a phase value of an end of the first OFDM symbol.

13. A method performed by a base station in a wireless communication system, the method comprising:

transmitting at least one synchronization signal;
transmitting system information;
performing a random access process with a user equipment (UE), based on the synchronization signal and the system information; and
receiving a backscattered signal corresponding a carrier wave (CW) signal transmitted from the base station, wherein the CW signal and the backscattered signal is transmitted from different frequencies.

14. The method of claim 13, further comprising:
determining a transmission frequency of the CW signal, based on at least one of a cell index, a subframe index in which the CW signal is transmitted, a slot index in which the CW signal is transmitted, a symbol index corresponding to the CW signal, a symbol index for an AmIoT communication, or a type of an AmIoT device included in the UE.

15. The method of claim 13, further comprising:
determining a frequency gap of a transmission frequency of the backscattered signal or the CW signal and the backscattered signal, based on at least one of an AmIoT device index included in the UE, a subframe index in which the CW signal is transmitted, a slot index in which the CW signal is transmitted, a symbol index corresponding to the CW signal, a symbol index for an AmIoT communication, a type of an AmIoT device, or a capability of the UE for a maximum frequency gap size.

16. The method of claim 15, further comprising:
transmitting, to the UE, information related to the transmission frequency of the backscattered signal or the frequency gap.

17. A user equipment (UE) in a wireless communication system, comprising:

a transceiver; and
a processor connected to the transceiver,
wherein the processor is configured to:

receive at least one synchronization signal;
receive system information;
perform a random access process for accessing a base station based on the synchronization signal and the system information; and
transmit a backscattered signal by reflecting a carrier wave (CW) signal transmitted from the base station, wherein the CW signal and the backscattered signal is transmitted from different frequencies.

18. A base station in a wireless communication system, comprising:

a transceiver; and
a processor connected to the transceiver,
wherein the processor is configured to:

transmit at least one synchronization signal;
transmit system information;
perform a random access process with a user equipment (UE), based on the synchronization signal and the system information; and
receive a backscattered signal corresponding a carrier wave (CW) signal transmitted from the base station, wherein the CW signal and the backscattered signal is transmitted from different frequencies.

19. A communication device comprising:

at least one processor; and

at least one computer memory connected to the at least one processor and storing instructions that direct operations when executed by the at least one processor, the operations comprising:

> receiving at least one synchronization signal;
> receiving system information;
> performing a random access process for accessing a base station based on the synchronization signal and the system information; and
> transmitting a backscattered signal by reflecting a carrier wave (CW) signal transmitted from the base station, wherein the CW signal and the backscattered signal is transmitted from different frequencies.

20. A non-transitory computer-readable medium storing at least one instruction, the at least one instruction being executable by a processor, the at least one instruction causing a device, the processor, to:

> receive at least one synchronization signal;
> receive system information;
> perform a random access process for accessing a base station based on the synchronization signal and the system information; and
> transmit a backscattered signal by reflecting a carrier wave (CW) signal transmitted from the base station, wherein the CW signal and the backscattered signal is transmitted from different frequencies.

# FIG. 1

Non-Terrestrial Network

Split gNB in NG-RAN

Mobile IAB

MT DU

gNB-CU-UP

gNB-CU-UP    gNB-CU-UP

CU DU

Donor node

gNB-DU

UE-to-UE relay

UE-to-Network relay

Network Controlled Repeater

Sidelink Relay

EP 4 765 775 A1

# FIG. 2

# FIG. 3

200

208

202

206

First Device

Processor(s)

Transceiver(s)

Memory(s)

204

# FIG. 4

Terminal
(410)

Base Station
(420)

synchronization (401)

System information acquisition (403)

random access (405)

control information signaling (405)

data transmission/reception (407)

# FIG. 5

# FIG. 6

First node                                          Second node

1. first signaling

2. perform operation based on AI/ML model

3. second signaling

# FIG. 7

Radio  Microwave  Infrared  Visible  Ultraviolet  X-Ray  Gamma-Ray

mmWave  Terahertz

Wavelength  $10^8$m  1m  10mm  1mm  0.1mm  700nm  390nm  10nm  0.01nm

Radiation Type

Frequency  3 Hz  300 MHz  30 GHz  300 GHz  3 THz  430 THz  730 THz  30 PHz  30 EHz

Mega: $10^6$  Giga: $10^9$  Tera: $10^{12}$  Peta: $10^{15}$  Exa: $10^{18}$

# FIG. 8

BS(820)

UE(810)          Cell#1(THz)          Cell#2

system information of cell#1 (801)

obtain synchronization for cell#1 (803)

signal for accessing to cell#1 (805)

perform access procedure and communication (807)

# FIG. 9

UE(910)                    BS(920)

resource configuration
for beam management (901)

measurement signal (903)

•
•
•

feedback signal (905)

perform communication (907)

FIG. 10a

Data network

Gateway

Feeder link

Satellite
(or UAS platform)

Service link

Beam foot print

User Equipments

Field of view of the satellite
(or UAS platform)

# FIG. 10b

Satellite (or UAS platform) — Satellite (or UAS platform)

ISL

Feeder link

Service link

Feeder link (mandatory if on ISL)

Gateway

Data network

User Equipments

Beam foot print

Field of view of the satellite (or UAS platform)

EP 4 765 775 A1

# FIG. 11a

# FIG. 11b

# FIG. 11c

# FIG. 12a

6G-based wireless communication system

Scattered/Reflected signal

Object

Object   Sensing signal

Sensing Receiver

Sensing Transmitter

Sensing data

Processing

Sensing results

Wireless Sensing Service

Sensing results

Trusted 3rd party

# FIG. 12b

6G-based wireless communication system

```
┌─────────────┐                    ┌─────────┐  Sensing      ┌───────────┐  Sensing   ┌──────────┐
│  Sensing    │                    │ Sensing │   data        │Processing │  results   │ Wireless │
│ Transmitter │                    │ Receiver│ ═══════════>  │           │ ═════════> │ Sensing  │
└─────────────┘   Sensing signal   └─────────┘               └───────────┘            │ Service  │
                                                                                      └──────────┘
```

Sensing signal

Scattered/Reflected signal

Sensing results

(Object)

(Object)

Trusted 3rd party

# FIG. 13

# FIG. 14

# FIG. 15

Ambient IoT data/signaling

BS

Ambient IoT device

# FIG. 16

Ambient IoT data/signaling

Uu

BS

intermediate node

Ambient IoT device

# FIG. 17a

→ Ambient IoT data/signaling

# FIG. 17b

→ Ambient IoT data/signaling

EP 4 765 775 A1

# FIG. 18

Ambient IoT data/signaling

UE

Ambient IoT device

# FIG. 19a

56

# FIG. 19b

# FIG. 20

# FIG. 21a

# FIG. 21b

# FIG. 22

START

map modulation symbols to a first carrier — S2201

map CW signal to a second carrier — S2203

perform OFDM modulation and transmit it — S2205

END

# FIG. 23

START

receive CW signal — S2301

perform a process for including data — S2303

reflect CW signal — S2305

END

# FIG. 24

F_gap

F_c          F_t          Frequency

# FIG. 25

T_gap

T_c          T_t          Frequency

# FIG. 26

Base station
(2620)

UE
(2610)

CW of F_c frequency (S2601)

S2603 — | backscattering applying F_gap
determined by UE ID,
time index, device type, etc.

transmit backscattering data on F_t
(=F_c + F_gap) frequency (S2605)

# FIG. 27

2702

Energy Harvesting
Division

2704

Energy Storage and Management Division

2706

RF Chain

Reflective Circuit

2708

Processor

2710

## INTERNATIONAL SEARCH REPORT

| International application No. |
|---|
| **PCT/KR2024/012289** |

### A. CLASSIFICATION OF SUBJECT MATTER

**H04L 67/12**(2022.01)i

According to International Patent Classification (IPC) or to both national classification and IPC

### B. FIELDS SEARCHED

Minimum documentation searched (classification system followed by classification symbols)

H04L 67/12(2022.01); H02J 50/00(2016.01); H04B 1/713(2011.01); H04L 27/00(2006.01); H04W 52/02(2009.01); H04W 72/04(2009.01); H04W 74/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 동기(synchronization), 랜덤 억세스(random access), CW(carrier wave), 백스캐터링(backscattering), 반사(reflection), 주파수(frequency)

### C. DOCUMENTS CONSIDERED TO BE RELEVANT

| Category* | Citation of document, with indication, where appropriate, of the relevant passages | Relevant to claim No. |
|---|---|---|
| X | WO 2022-222053 A1 (HUAWEI TECHNOLOGIES CO., LTD.) 27 October 2022 (2022-10-27) See paragraphs [0046], [0064], [0067], [0111] and [0118]; and claim 1. | 1-10,13-20 |
| Y | | 11-12 |
| Y | QUALCOMM. Views on Ambient IoT. RP-231050, 3GPP TSG RAN Meeting #100. Taipei. 05 June 2023. See page 6. | 11-12 |
| A | US 2020-0212956 A1 (UNIVERSITY OF WASHINGTON) 02 July 2020 (2020-07-02) See paragraphs [0069]-[0146]; and figures 1-8. | 1-20 |
| A | WO 2022-170267 A1 (INTERDIGITAL PATENT HOLDINGS, INC.) 11 August 2022 (2022-08-11) See paragraphs [0027]-[0222]; and figures 1A-14. | 1-20 |

☑ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **04 December 2024** | **04 December 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| :--- |
| **PCT/KR2024/012289** |

| C. | DOCUMENTS CONSIDERED TO BE RELEVANT | |
| :---: | :--- | :---: |
| Category* | Citation of document, with indication, where appropriate, of the relevant passages | Relevant to claim No. |
| A | US 2019-0274144 A1 (THE BOARD OF TRUSTEES OF THE LELAND STANFORD JUNIOR UNIVERSITY) 05 September 2019 (2019-09-05) See paragraphs [0038]-[0115]; and figures 1-17B. | 1-20 |

## INTERNATIONAL SEARCH REPORT
### Information on patent family members

International application No.

**PCT/KR2024/012289**

| Patent document cited in search report | | | Publication date (day/month/year) | Patent family member(s) | | | Publication date (day/month/year) |
|---|---|---|---|---|---|---|---|
| WO | 2022-222053 | A1 | 27 October 2022 | CN | 117203948 | A | 08 December 2023 |
| | | | | EP | 4315769 | A1 | 07 February 2024 |
| | | | | EP | 4315769 | A4 | 29 May 2024 |
| | | | | US | 2024-0146408 | A1 | 02 May 2024 |
| US | 2020-0212956 | A1 | 02 July 2020 | CN | 108141646 | A | 08 June 2018 |
| | | | | CN | 108141646 | B | 21 September 2021 |
| | | | | EP | 3335432 | A1 | 20 June 2018 |
| | | | | EP | 3335432 | A4 | 13 March 2019 |
| | | | | EP | 3335432 | B1 | 14 February 2024 |
| | | | | US | 10873363 | B2 | 22 December 2020 |
| | | | | WO | 2017-027847 | A1 | 16 February 2017 |
| WO | 2022-170267 | A1 | 11 August 2022 | BR | 112023015950 | A2 | 24 October 2023 |
| | | | | CN | 117044067 | A | 10 November 2023 |
| | | | | EP | 4289045 | A1 | 13 December 2023 |
| | | | | JP | 2024-506606 | A | 14 February 2024 |
| | | | | KR | 10-2023-0144595 | A | 16 October 2023 |
| | | | | US | 2024-0106532 | A1 | 28 March 2024 |
| US | 2019-0274144 | A1 | 05 September 2019 | CA | 3041667 | A1 | 03 May 2018 |
| | | | | CN | 110100464 | A | 06 August 2019 |
| | | | | EP | 3532981 | A1 | 04 September 2019 |
| | | | | JP | 2020-509618 | A | 26 March 2020 |
| | | | | KR | 10-2019-0075093 | A | 28 June 2019 |
| | | | | US | 11483836 | B2 | 25 October 2022 |
| | | | | US | 2023-0103390 | A1 | 06 April 2023 |
| | | | | WO | 2018-081319 | A1 | 03 May 2018 |

Form PCT/ISA/210 (patent family annex) (July 2022)